# EUROPÄISCHE PATENTSCHRIFT

(11) **EP 1 330 369 B1**
(45) Veröffentlichungstag und Bekanntmachung des Hinweises auf die Patenterteilung: **29.09.2004**
(21) Anmeldenummer: 01992647.6
(22) Anmeldetag: 02.11.2001
(51) Int. Cl.: B42D 15/10, B41M 5/24

(54) **MEHRSCHICHTENKÖRPER, INSBESONDERE MEHRSCHICHTENFOLIE SOWIE VERFAHREN ZUR ERHÖHUNG DER FÄLSCHUNGSSICHERHEIT EINES MEHRSCHICHTENKÖRPERS**
MULTI-LAYERED BODY, IN PARTICULAR A MULTI-LAYERED FILM AND METHOD FOR INCREASING THE FORGERY PROTECTION OF A MULTI-LAYERED BODY
CORPS MULTICOUCHE, NOTAMMENT FILM MULTICOUCHE ET PROCEDE PERMETTANT D'ASSURER UNE MEILLEURE PROTECTION D'UN CORPS MULTICOUCHE CONTRE DES CONTREFACONS

(30) Priorität: 04.11.2000 DE 10054805; 13.08.2001 DE 10139719
(43) Veröffentlichungstag der Anmeldung: 30.07.2003
(73) Patentinhaber: Leonhard Kurz GmbH & Co. KG, 90763 Fürth (DE)
(72) Erfinder: LUTZ, Norbert, 90607 Rückersdorf (DE); ZINNER, Gerhard, 90602 Pyrbaum (DE)
(74) Vertreter: Köhler, Walter, Dr.-Ing.
(86) Internationale Anmeldenummer: PCT/DE2001/004155
(87) Internationale Veröffentlichungsnummer: WO 2002/036357

(56) Entgegenhaltungen:
- EP-A- 0 327 508
- EP-A- 0 420 261
- EP-A- 0 678 400
- DE-A- 4 131 964
- US-A- 4 523 777
- US-A- 5 298 922

## Beschreibung

Die Erfindung betrifft einen Mehrschichtenkörper, insbesondere eine Mehrschichtenfolie mit den Merkmalen des Oberbegriffs des Anspruchs 1 sowie ein Verfahren zur Erhöhung der Fälschungssicherheit eines Mehrschichtenkörpers mit dem Merkmal des Oberbegriffs des Anspruchs 22.

Aus der DE 37 38 330 A1 ist ein Laserbeschriftungsverfahren zur Anwendung bei Oberflächen mit Pigmentüberzug bekannt, wobei Pigmente des Pigmentüberzugs bei unterschiedlichen Temperaturen ihren inneren Molekularaufbau ändern und unterschiedliche Farben liefern. Mit der Lasereinstrahlung werden lokal die spezifischen Oberflächentemperaturen erzielt, wodurch farbige Lasermarkierungen erhalten werden

Die DE 44 10 431 A1 beschreibt ein Verfahren, mit dem auf einer Ausweiskarte personenbezogene Daten durch Laserbeschriftung eingebrächt werden, wobei die Ausweiskarte ein im Transferverfahren aufgebrachtes Kopierschutzelement aufweist. Beim Laserbeschriften wird ein Kennzeichen in Form einer Ziffemreihe eingebracht, indem ein Teil der Ziffernreihe in dem Kopierschutzelement und ein weiterer Teil der Ziffernreihe in einem anschließenden Bereich der Ausweiskarte eingebracht wird. Die Laserbeschriftung erfolgt über lokale Demetallisierung in der Metallschicht des Kopierschutzelements bzw. durch Schwärzung des behandelten Bereichs der Ausweiskarte.

Die EP 0 219 011 B1 beschreibt ein spezielles Verfahren zur Laserbeschriftung von Ausweiskarten. Bei diesem Verfahren werden in verschiedenen transparenten Schichten der Karte mittels des Lasers schwarze Markierungen eingebracht. In den miteinander zusammenwirkenden transparenten Schichten werden auf diese Weise paralaxe Bilder erhalten

Die GB 2 240 948 A beschreibt ebenfalls das Laserbeschriften von Ausweiskarten. Die Laserbeschriftung erfolgt hier durch Abtragen unterschiedlicher Farbschichten. Die dabei erhaltene Lasermarkierung erscheint als farbige Markierung

Die DE 41 31 964 A1 beschreibt Laserbeschriften einer Mehrschichtenfolie mit Metallschicht und Hologrammstruktur. Das Beschriften erfolgt durch bereichsweise Schwärzen und Abtragen von Schichten.

Aus der EP 0 420 261 A2 sind verschiedene Maßnahmen zur Erhöhung der Fälschungssicherheit für Systeme mit Heißprägefolien mit Hologrammstruktur bekannt. Unter anderem ist dort beschrieben, daß in die Hologrammstruktur oder in andere Lackschichten der Folie durch Laserbehandlung laserinduzierte Markierungen eingebracht werden. Eine andere Methode zum Individualisieren von Folien mit Hologrammstruktur, die zusätzlich oder alternativ angewandt werden kann, wird dahingehend beschrieben, daß ein individualisierender Prägestempel verwendet wird, der der Hologrammstruktur eine individualisierte Außenkontur verleiht. Nachteilig bei den beschriebenen Individualisierungsmaßnahmen ist, daß anhand der auf dem Substrat aufgebrachten Folie ohne Heranziehung eines Vergleichsmusters nicht ohne weiteres erkennbar ist, ob eine Fälschung vorliegt.

Die Erzeugung von Mehrfarben-Markierungen in Beschichtungen ist aus WO 96/35585 und WO 94/12352 bekannt, die Erzeugung von Einfarben- Markierungen ist aus EP 0 327 508, EP 0 190 997 und DE 37 38 330 bekannt. Diesbezüglich gilt folgendes:

Aus der WO 96/35585 sind verschiedene Ausführungen von Kunststoffkörpern, und zwar massive Körper oder Beschichtungen, bekannt, die jeweils ein Gemisch aus verschiedenen Pigmenten enthalten. Bei den verschiedenen Ausführungsbeispielen setzt sich das Pigmentgemisch aus drei Pigment-Komponenten zusammen, und zwar einem Gelbpigment, einem Magentapigment und einem Cyanpigment. Durch Laserbehandlung erfolgt Farbmarkierung auf dem Kunststoffkörper. Die Farbmarkierung entsteht durch eine Bleichung der Pigmente mittels der Laserbehandlung. Die Laserbedingungen werden jeweils spezifisch unter Variation der Wellenlänge eingestellt, um bestimmte Farben zu erhalten. Die jeweils zur Anwendung kommende spezifische Wellenlänge wird zuvor durch Lichtabsorptionsmessungen an den Pigmenten ermittelt, und zwar wird jeweils die Absorptionswellenlänge im Absorptionsmaximum des Pigments ermittelt. Es werden jeweils Pigmente eingesetzt, die nur ein einziges Absorptionsmaximum aufweisen. Damit soll gewährleistet werden, daß bei der Laserbehandlung eine Farbe erhalten wird, die der Farbe des Laserlichts entspricht und die Dauer der Laserbehandlung und die Intensität des Laserlichts für jede Farbe den gleichen Wert haben kann. Bei dem beschriebenen Ausführungsbeispiel mit Pigmentgemisch aus Gelbpigment, Magentapigment und Cyanpigment wird zur Laserbehandlung violettes Laserlicht bei Wellenlänge 430 nm, blaues Laserlicht bei Wellenlänge 470 nm, gelbes Laserlicht bei Wellenlänge 575 nm und als orange bezeichnetes Laserlicht bei Wellenlänge 650 nm verwendet. Auf diese Weise sollen durch die Laserbehandlung durch entsprechende Einstellung der Laserwellenlänge bei sonst gleichen Laserbedingungen verschiedene Farbmarkierungen auf dem Kunststoffkörper zu erzeugen sein. Die Farben entstehen durch komplexe Mischung der bei der jeweiligen Laserwellenlänge gleichzeitig gebleichten Pigmente. Eine Methodik, um mit einer begrenzten Anzahl von Pigmenten möglichst sämtliche Farben zu erzeugen, wird nicht gegeben.

Aus der WO 94/12352 ist ebenfalls bekannt, auf einem Kunststoffkörper, der eine Pigmentmischung enthält und als massiver Körper oder als Beschichtung ausgebildet sein kann, durch Laserbehandlung mit unterschiedlichen Wellenlängen bunte Farbmarkierungen zu erzeugen. Die Farbbildung erfolgt dadurch, daß die Pigmente bei der Laserbehandlung ihre Farbe durch Farbumschlag ändern. Die Laserbedingungen werden jeweils zufällig gewählt. Ein Verfahren, um beliebige Farben gezielt zu erzeugen, wird nicht gegeben. Ferner ist die Anzahl der so erzeugten Farben sehr begrenzt.

Aus der EP 0 327 508 ist ein Verfahren bekannt, bei dem ein laserempfindlicher Farbstoff A und ein laserunempfindlicher Farbstoff B in zwei separaten übereinanderliegenden Schichten oder in einer gemeinsamen Schicht enthalten sind und durch Laserbehandlung der Farbstoff A gebleicht wird, während der laserunempfindliche Farbstoff B nicht oder nur wenig gebleicht wird. Bei der Laserbehandlung wird eine Farbmarkierung erhalten, jedoch nur eine einfarbige Markierung, d.h. ein maximal Zweifarben-Bild. Das Verfahren sieht keine Variation der Laserbedingungen zur Erzeugung unterschiedlicher Farben vor.

Aus der EP 0 190 997 B1 ist ein Verfahren bekannt, bei dem in einer als Überzug eines Metallplättchens ausgebildeten Kunststoffschicht oder in einer Kunststoffplatte ein Zusatz enthalten ist, der unter Laserbehandlung verfärbbar ist und zwar durch Farbumschlag von einer Farbe in eine andere oder Umwandlung in Schwarz. Farbmarkierungen mit unterschiedlichen Farben sind dabei nicht möglich.

Aus der EP 0 416 664 B1 ist bekannt, durch Lasermarkierung in Kunststoffkörpem oder Folienschichten schwarze Markierungen zu erzeugen. Die Markierungen entstehen durch laserbedingte Schwärzung der in dem Kunststoff enthaltenden laserempfindlichen Komponente Molybdänsulfit.

Aus der DE 195 22 397 A1 ist es bekannt, durch Laserbehandlung von Pigmenten enthaltenden Kunststoffschichten helle Beschriftung zu erzeugen. Dies erfolgt durch Laserbleichen der erhaltenen Pigmente.

Aus der EP 0 537 668 und DE 81 30 861 U1 ist es bekannt, im Schichtenaufbau von Transferfolien Schichten durch Laserbehandlung bereichsweise abzutragen, um so Beschriftungen zu erhalten.

Außerdem ist es z.B. aus EP 0 741 370 B1, DE 43 33 546 A1 oder US 4 911 302 bekannt, durch Laserbehandlung von Schichtenkörpem Markierungen durch laserinduziertes Aufschmelzen des Materials zu erzeugen, um diese Beschriftungen sodann noch im Schmelzzustand auf einen anderen Körper zu übertragen.

Der Erfindung liegt die Aufgabe zugrunde, die Fälschungssicherheit eines Mehrschichtenkörpers, z.B. Datenträger, wie Ausweiskarte oder dergleichen zu erhöhen.

Diese Aufgabe löst die Erfindung mit einem Mehrschichtenkörper gemäß Anspruch 1 sowie mit dem Verfahren zur Erhöhung der Fälschungssicherheit eines Mehrschichtenkörpers gemäß Anspruch 22.

Bei dem Mehrschichtenkörper kann es sich um eine Mehrschichtenfolie, beispielsweise eine Transferfolie z.B. Heißprägefolie oder eine Laminierfolie handeln, oder aber auch um einen beschichteten Körper, vorzugsweise mit Folie beschichtetem Kunststoffkörper. Hierbei kann die Oberfläche des Substrats eine Schicht darstellen. Durch die passergenaue, also paßgenaue und/oder zuordnungsgenaue Positionierung der mit der Laserbestrahlung in der lasersensitiven Schicht erzeugten Markierung, der sogenannten laserinduzierten Markierung, relativ zu dem im Schichtenaufbau bereits vor der Laserbehandlung vorhandenen Kennzeichnungselement, welches z.B. als Diffraktions- und/oder Hologrammstruktur gegebenenfalls mit Bewegungseffekt, oder als Druckbild oder als Reflexionsfeld, d. h. Bereich mit erhöhter Lichtreflexion und/oder erhöhtem Brechungsindex ausgebildet sein kann, wird ein paßgenau zusammengesetztes Individualisierungskennzeichen erhalten, welches zusammengesetzt ist aus dem bereits vorhandenen Kennzeichnungselement und der laserinduzierten Markierung. Diese ist bevorzugt als Vollfarbenbild ausgebildet. Die passergenaue Zusammensetzung kann ohne weiteres, vorzugsweise durch einfache Betrachtung von außen ohne aufwendige Gerätschaft kontrolliert werden, um die Echtheit festzustellen. Dies bedeutet, daß durch dieses spezielle Zusammenwirken der laserinduzierten Markierung mit dem jeweiligen Kennzeichnungselement ein kombinatorischer Effekt gebildet wird, welcher einen quasi synergetischen Effekt darstellt. Spezielle kombinatorische visuelle Effekte können dabei durch Überlagerung von Diffraktions- und laserinduzierten Farbbildern entstehen.

Die passergenaue Positionierung der laserinduzierten Markierung kann durch entsprechende Steuerung des masselosen Laserstrahls ausgeführt werden. Vorzugsweise kann die Steuerung elektronisch erfolgen und zwar abhängig von einer Erfassung der Ist-Position des im Schichtenaufbau bereits vorhandenen Kennzeichnungselements, zu dem jeweils die Zuordnung erfolgt.

Der Laser kann durch Erfassung von Ausgestaltungsparametern einer Hintergrundschicht, vorzugsweise Erfassung des Druck- bzw. Diffraktionsbildes und/oder durch Erfassung von Ausgestaltungsparametern der lasersensitiven Schicht bzw. des laserinduzierten Bildbestandteiles insbesondere mittels Bildverarbeitung gesteuert werden. Vorzugsweise kann die Position, die Einfallsrichtung des Laserstrahls, die Laserwellenlänge, die Einwirkdauer, die Pulszahl und/oder die Laserintensität gesteuert werden.

Die Farbmarkierungen können unterschiedliche Farben aufweisen. Die Farbmarkierungen können auch jeweils mehr oder weniger kontinuierlichen Farbübergang aufweisen. Bei besonderen Ausführungen weist jede Farbmarkierung einen bestimmten Farbton auf, der in einem bestimmten Abschnitt oder über den gesamten Bereich der Markierung konstant ist.

Besonders hohe Fälschungssicherheit wird erhalten, wenn die laserinduzierte Markierung als Farbmarkierung ausgebildet wird und zwar insbesondere dann, wenn die Markierung als mehrfarbige Markierung ausgebildet wird. Von besonderem Vorteil ist es in diesem Zusammenhang, wenn die laserinduzierte Markierung durch laserinduziertes Bleichen der in der lasersensitiven Schicht vorhandenen Farbmittel erfolgt.

Um ein Vollfarbenbild zu erhalten, ist bei besonderen Ausführungen vorgesehen, daß das lasersensitive Material als Gemisch von verschiedenen lasersensitiven Komponenten ausgebildet ist, vorzugsweise aus mindestens drei verschiedenen Farbmittelkomponenten. Jede dieser Komponenten, vorzugsweise jede Komponente des Gemischs, ist mittels Laser unter jeweils für die Komponente spezifischen Laserbedingungen bleichbar, vorzugsweise wird hierbei ein Cyanfarbmittel eingesetzt, welches als ein mit rotem Laserlicht bleichbares Farbmittel ausgebildet ist, ein Magentafarbmittel, welches als ein mit grünem Laserlicht bleichbares Farbmittel ausgebildet ist und ein Gelbfarbmittel, welches als ein mit blauem Laserlicht bleichbares Farbmittel ausgebildet ist. Alternativ können anstelle solcher bleichbaren Farbmittel auch Farbmittel eingesetzt werden, die mittels des Lasers unter jeweils für die Komponente spezifischen Laserbedingungen farbveränderbar, vorzugsweise mit Farbumschlag farbveränderbar sind.

Bei besonders bevorzugten Ausführungen ist das im Schichtenaufbau bereits vorhandene Kennzeichnungselement als Diffraktions- und/oder Hologrammstruktur ausgebildet, vorzugsweise als eine in ihrer Außenkontur charakteristisch begrenzte Diffraktions- und/oder Hologrammstruktur. Vorteilhafterweise kann die betreffende Struktur als Linie, z.B. Wellenlinie, insbesondere als Gruppe mehrerer nebeneinander angeordneter Linien ausgebildet sein. Bei besonderen Ausführungen ist vorgesehen, daß die betreffende Struktur in Art einer Guilloche ausgebildet bzw. eine Guilloche in der Diffraktions- oder der Hologrammstruktur enthalten ist. Ferner sind auch Ausführungen vorgesehen, bei denen das im Schichtenaufbau bereits vorhandene Kennzeichnungselement alternativ oder zusätzlich zu der Diffraktions- und/oder Hologrammstruktur als Bedruckung oder dergleichen ausgebildet ist.

Besonders leichte Kontrolle der Echtheit ergibt sich bei Ausführungen, bei denen die laserinduzierte Markierung und das im Schichtenaufbau bereits vor der Laserbehandlung vorhandene zugeordnete Kennzeichnungselement in Draufsicht auf die Schichtenebene passergenau aneinander, vorzugsweise unmittelbar aneinander angrenzend nebeneinander angeordnet sind. Alternativ oder in bestimmten anderen Bereichen kann die Zuordnung auch so ausgebildet sein, daß die laserinduzierte Markierung und das andere Kennzeichnungselement vollständig oder abschnittsweise passergenau überlappend, vorzugsweise fluchtend übereinander angeordnet sind.

Besonders vorteilhaft sind Ausführungen, bei denen die laserinduzierte Markierung und das andere Kennzeichnungselement jeweils linienförmig ausgebildet sind und in der Draufsicht auf die Schichtenebene als eine paßgenau zusammengesetzte, vorzugsweise kontinuierlich verlaufende Linie optisch erkennbar sind, die beiden Linienabschnitte also optisch erkennbar einander fortsetzen. Ferner sind Ausführungen vorgesehen, bei denen die laserinduzierte Markierung und das andere Kennzeichnungselement relativ zu einer fiktiven oder konkret vorhandenen gemeinsamen Fluchtlinie angeordnet sind, insbesondere wenn die laserinduzierte Markierung mit dem anderen Kennzeichnungselement als eine gemeinsame Buchstaben- und Zahlenfolge in Art eines Kennzeichnungswortes bzw. einer mehrstelligen Kennzeichnungs-nummer ausgebildet ist. Zur Erhöhung der Fälschungssicherheit kann insbesondere die laserinduzierte Markierung zusätzlich als Mikroschrift ausgebildet sein. Solche Ausführungen sind schwer fälschbar, weil Mikroschrift nur mit hohem technischen Aufwand drucktechnisch realisierbar ist und dokumentspezifische Information (z. B. Name des Ausweisinhabers etc.) bei der Personalisierung wiederholt werden kann. Die laserinduzierte Mikroschrift kann mehrfarbig, vorzugsweise mit entsprechendem Farbverlauf ausgebildet sein.

Besonders hohe Fälschungssicherheit ergibt sich auch bei Ausführungen, bei denen die laserinduzierte Markierung und das zugeordnete andere Kennzeichnungselement in Guillochen ausgebildet sind. Vorteilhafterweise schließen auch diese Guillochen paßgenau aneinander an, so daß in Draufsicht auf die Schichtenebene eine paßgenaue zusammengesetzte Guillochenstruktur optisch erkennbar ist.

Bei weiteren Ausführungen ist vorgesehen, daß die laserinduzierte Markierung und das im Schichtenaufbau bereits zuvor vorhandene Kennzeichnungselement jeweils als Flächenfeld ausgebildet ist. Sowohl die laserinduzierten Markierungen als auch das andere Kennzeichnungselement können jeweils als alternierend aneinander angrenzende Flächenfelder ausgebildet sein. Die aneinander angrenzenden Felder sind vorzugsweise optisch erkennbar unterschiedlich ausgebildet, z. B. durch unterschiedliche Farbe oder unterschiedliche Struktur, etwa als vorzugsweise ebener Reflexionsbereich oder als diffraktive und/oder als holographische Struktur. Die im Schichtenaufbau bereits vor der Laserbehandlung vorhandenen Flächenfelder können in einer Reflexionsschicht, z.B. alternierend als ebene Reflexionsschicht und als Diffraktionstruktur ausgebildet sein. Sie sind vorzugsweise von außen her betrachtet über den laserinduzierten Flächenfeldern angeordnet. Umgekehrte Anordnung ist bei Ausführungen jedoch ebenfalls möglich. Die laserinduzierten Flächenfelder werden vorzugsweise mit alternierenden unterschiedlichen Farben ausgebildet. Es ergeben sich bei unterschiedlichen Betrachtungswinkeln unterschiedliche optische Effekte, die durch die alleinige Verwendung der Kennzeichnungselemente bzw. der laserinduzierten Markierungen nicht erzeugt werden können.

Es sind Ausführungen vorgesehen, bei denen ein laserinduzierter Bildbestandteil passergenau zu einem zugeordneten Bildbestandteil, der z. B. in einer oder durch eine Hintergrundschicht oder überdeckenden Schicht gebildet ist, angeordnet ist. Vorzugweise kann vorgesehen sein, daß eine Vielzahl von laserinduzierten Bildbestandteilen passergenau nebeneinander angeordnet ist und also ein Mehrschichtenbild aus diesen vielen paßgenau zueinander angeordneten Bildbestandteilen zusammengesetzt ist.

Besondere optische Effekte werden mit Ausführungen erhalten, bei denen vorgesehen ist, daß der laserinduzierte Bildbestanteil farblos transparent oder farblich getönt transparent ausgebildet ist und ein in einer darunter oder darüber liegenden Schicht zugeordneter Bildbestandteil zu diesem in Richtung senkrecht zur Schichtenebene fluchtend oder seitlich versetzt angeordnet ist. Bei der darunter bzw. darüber liegenden Schicht kann es sich um die Hintergrundschicht bzw. überdeckende Schicht handeln, die z. B. als Reflexionsschicht mit vorzugsweise in einem begrenzten Bereich angeordneter Diffraktionsstruktur ausgebildet ist.

Bei bevorzugten Ausführungsbeispielen, insbesondere wenn der Mehrschichtenkörper in einer Transferfolie, z.B. Heißprägefolie oder in einer Laminierfolie oder in einer aus einer solchen Folie bestehenden Beschichtung ausgebildet ist, ist vorzugsweise vorgesehen, daß bei der Laserbehandlung ausschließlich die lasersensitive Schicht verändert wird und zwar vorzugsweise nur durch selektives Bleichen oder selektiven Farbumschlag. Vorteilhafterweise verbleiben eventuelle weitere Schichten, wie Schutzschichten, z.B. eine oder mehrere obere Schutzschichten, unverändert, d.h. es tritt keine Beschädigung dieser Schichten bei der Lasereinwirkung auf. Bei Ausführungen, die eine Reflexionsschicht aufweisen, ist die Reflexionsschicht vorzugsweise so ausgebildet, daß bei entsprechender Führung des Laserstrahls dieser hindurch treten kann und auf die ggf. darunter angeordnete lasersensitive Schicht einwirken kann. Besonders hohe Fälschungssicherheit wird erhalten, wenn die lasersensitive Schicht bzw. die laserinduzierte Markierung in Richtung auf den Mehrschichtenkörper bzw. auf das mit der Folie beschichtete Substrat gesehen unterhalb der Diffraktions- und/oder Hologrammstruktur und/oder der Reflexionsschicht angeordnet ist, wobei von besonderem Vorteil ist, wenn die laserinduzierte Markierung unmittelbar angrenzend an diese darüberliegende Struktur bzw. Schicht angeordnet ist.

Unter Reflexionsschicht oder Reflexionsfeld wird eine Schicht bzw. ein Bereich verstanden, der erhöhte Lichtreflexion und/oder erhöhten Brechungsindex aufweist. Es handelt sich dabei um eine Schicht bzw. einen Bereich, der aus Metall oder einer metallischen Verbindung ausgebildet sein kann, z. B. Aluminium, Chrom, Silber, Zinksulfid, Titanoxid usw., ferner ist auch eine Zusammensetzung aus anderen Materialien möglich, z. B. Germaniumverbindungen, Siliziumverbindungen usw. Es kann sich um eine flächige, vorzugsweise aufgedampfte Schicht bzw. Bereiche handeln. Diese Schicht bzw. Bereiche können zusammenhängend oder in von einander getrennten Bereichen ausgebildet sein. Es sind aus Ausführungen möglich, bei denen die Reflexionseigenschaft durch entsprechende Partikel oder dgl. erhalten wird, z. B. metallische Pigmente.

Im Nachfolgenden werden bevorzugte Ausführungsbeispiele unter Bezugnahme auf die beigefügten Figuren näher erläutert.

Es zeigen:
- Figuren 1 bis 5: Schnittdarstellungen von verschiedenen Heißprägefolien jeweils mit lasersensitiver Schicht,
- Figuren 6 bis 10: Schnittdarstellungen verschiedener Laminierfolien jeweils mit lasersensitiver Schicht,
- Figuren 11a bis d: perspektivische Darstellungen (a und c) und Schnittdarstellungen (b und d) eines ersten Ausführungsbeispieles von durch Laserbehandlung erzeugten Mehrschichtenbildern, wobei die Figuren a und b jeweils die Ausgestaltung im Bereich der lasersensitiven Schicht und der zweiten Schicht vor der Laserbehandlung und die Figuren c und d diese jeweils nach der Laserbehandlung zeigen,
- Figuren 12 und 13: perspektivische Darstellungen und Schnittdarstellungen entsprechend Figur 11 eines zweiten und dritten Ausführungsbeispiels,
- Figuren 14a bis d: perspektivische Darstellungen und Schnittdarstellungen entsprechend Figur 11 eines vierten Ausführungsbeispiels,
- Figuren 15a bis b: Draufsichtdarstellung des Ausführungsbeispiels in Figur 14
- Figuren 16a bis b: perspektivische Darstellungen entsprechend Figur 11 eines fünften Ausführungsbeispiels
- Figuren 17 und 18: Draufsichtdarstellungen eines sechsten und siebten Ausführungsbeispiels eines Mehrschichtenbildes,
- Figur 19: Draufsichtdarstellungen eines achten Ausführungsbeispiels.

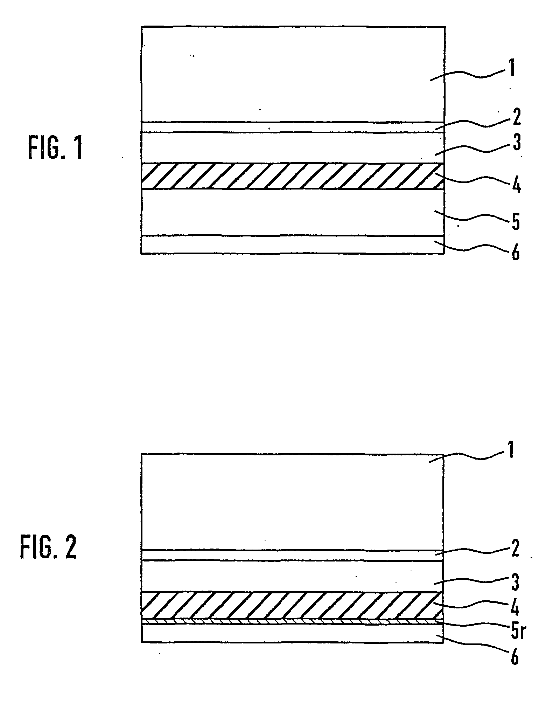

Im Folgenden werden zunächst unter Bezugnahme auf die Figuren 1 bis 10 Heißprägefolien und Laminierfolien beschrieben, in deren Schichtenaufbau eine laserinduzierte Individualisierung zwecks Fälschungssicherheit und Schaffung kombinatorischer visueller Effekte erzeugbar sind. In Verbindung mit diesen Figuren werden auch die grundsätzlichen Verfahrensschritte der Laserbehandlung beschrieben, mit denen die Folien, d.h. die lasersensitive Schicht behandelt wird, um die betreffende Individualisierung zu erzeugen. Anstelle von Heißprägefolien können auch andere Transferfolien eingesetzt werden.

Zunächst werden nun die diversen in den Figuren dargestellten Folien hinsichtlich ihres Schichtenaufbaus und der Materialzusammensetzung der einzelnen Schichten beschrieben.

Bei den in den Figuren 1 bis 5 dargestellten Folien handelt es sich um Heißprägefolien. Die Heißprägefolie in Figur 1 umfaßt einen Trägerfilm 1, eine Ablöseschicht 2, eine Schutzschicht 3, eine lasersensitive Schicht 4, eine Hintergrundschicht 5 und eine Klebeschicht 6.

Bei dem Trägerfilm 1 handelt es sich vorzugsweise um einen Polyesterfilm einer Dicke von 6 bis 100 µm, bevorzugt einer Dicke von 19 bis 38 µm. Auf diesem Trägerfilm 1 sind übereinander die Schichten 2 bis 6 angeordnet. Sie sind bei der Herstellung der Heißprägefolie nach an sich bekannten Verfahren aufgebracht.

Die Ablöseschicht 2 ist eine Trennschicht. Sie ist vorzugsweise als eine bei Wärmeentwicklung weich werdende Schicht ausgebildet, die beim Aufbringen der Heißprägefolie auf das Substrat die Ablösung der weiteren Schichten von dem Trägerfilm 1 gestattet. Die Ablöseschicht 2 hat im allgemeinen eine Dicke von höchstens 1 µm.

Die Schutzschicht 3 ist als Schutzlackschicht ausgebildet. Es handelt sich dabei um eine transparente Lackschicht mit der Aufgabe, die freie Oberfläche des mit der Heißprägefolie dekorierten Gegenstandes gegen mechanische Beschädigungen und chemische Einwirkungen weitgehend zu schützen. Die Schichtdicke liegt vorzugsweise zwischen 1 bis 2 µm.

Die lasersensitive Schicht 4 ist als sog. erste Farblackschicht ausgebildet. Es handelt sich hierbei um eine durch Pigmente eingefärbte und/oder mit anderen farbgebenden Systemen oder Farbmitteln versehene Lackschicht einer Dicke von vorzugsweise 3 bis 10 µm. Die Pigmente bzw. die anderen farbgebenden Systeme bzw. Farbmittel dieser Farblackschicht sind mit Hilfe eines Laserstrahls, dessen Wellenlänge vorzugsweise im sichtbaren Bereich liegt, selektiv bleichbar und/oder in eine andere Farbe veränderbar. Vorzugsweise liegt die Pigmentkonzentration dieser Lackschicht 4 zwischen 3 und 15% bezogen auf Festkörper. Das Bindemittelsystem dieser Lackschicht 4 darf durch die Einwirkung des Lasers optisch nicht verändert werden, so daß an den bestrahlten Stellen lediglich eine farbige Kontrastmarkierung ohne Schädigung der Folie entsteht. Die Folie wird weder an der Oberfläche noch im Inneren erkennbar geschädigt.

Die Hintergrundschicht 5 ist als sog. zweite Farblackschicht ausgebildet. Diese Schicht ist anders gefärbt als die lasersensitive Schicht 4. Die Schicht 5 ist z.B. weiß oder elfenbeinfarbig, wenn die lasersensitive Schicht 4 schwarz oder grau ist. Die Schicht 5 dient in erster Linie als helle Backupschicht für die in der lasersensitiven Schicht 4 durch Laserstrahlung erzeugten Farben. Die Schichtdicke der Schicht 5 liegt vorzugsweise bei 15 bis 20 µm.

Es besteht die Möglichkeit, die Hintergrundschicht 5 - ebenso wie die lasersensitive Schicht 4 - nicht über die gesamte Fläche der Heißprägefolie und damit nicht über die gesamte zu dekorierende Oberfläche in der gleichen Farbstellung vorzusehen. Die Schichten 4 und 5 können vielmehr einzeln - und damit auch unterschiedlich - aus verschiedenfarbigen Bereichen zusammengesetzt sein.

Bei der Kleberschicht 6 handelt es sich um eine bei Transferfolien bzw. Heißprägefolien an sich übliche und bekannte Kleberschicht einer Dicke von etwa 1 bis 10 µm, wobei die Kleberschicht für eine Heißprägefolie so zusammengesetzt ist, daß sie erst bei entsprechender Wärmeeinwirkung klebrig wird.

Die Schichten 2 bis 6 können nach folgenden Rezepturen hergestellt sein:

| Ablöseschicht 2 (Trennschicht): | |
|---|---|
| Toluol | 99,5 Teile |
| Esterwachs (Tropfpunkt 90°C) | 0,5 Teile |

| Schutzschicht 3 (Schutzlackschicht): | |
|---|---|
| Methylethylketon | 61,0 Teile |
| Diaketonalkohol | 9,0 Teile |
| Methylmethanacrylat (Tg = 122°C) | 18,0 Teile |
| Polyethylendispersion (23% in Xylol) (Erweichungspunkt 140°C) | 7,5 Teile |
| Hochmolekulares Dispergieradditiv (40%, Aminzahl 20) | 0,5 Teile |
| Extender (Aluminiumsilikat) | 4,0 Teile |

| Lasersensitive Schicht 4 (Erste Farblackschicht): | |
|---|---|
| Methylethylketon | 34,0 Teile |
| Toluol | 26,0 Teile |
| Ethylacetat | 13,0 Teile |
| Cellulosenitrat (niedrigviskos, 65% in Alkohol) | 20,0 Teile |
| Lineares Polyurethan (Fp.>200°C) | 3,5 Teile |
| Hochmolekulares Dispergieradditiv (50%, Aminzahl 20) | 2,0 Teile |
| z.B.: Pigment Blue 15:4 | 0,5 Teile |
| Pigment Red 57:1 | 0,5 Teile |
| Pigment Yellow 155 | 0,5 Teile |
| | |

| Hintergrundschicht 5 (Zweite Farblackschicht): | |
|---|---|
| Methylethylketon | 40,0 Teile |
| Toluol | 22,0 Teile |
| Ethylen-Vinylacetat-Terpolymer (Fp.=60°C) | 2,5 Teile |
| Polyvinylchlorid (Tg: 89°C) | 5,5 Teile |
| Polyvinylchlorid (Tg: 40°C) | 3,0 Teile |
| Dispergieradditiv (50%, Säurezahl 51) | 1,0 Teile |
| Titandioxid (d=3,8-4,2 g/cm³ ) | 26,0 Teile |
| | |

| Kleberschicht 6: | |
|---|---|
| Methylethylketon | 55,0 Teile |
| Toluol | 12,5 Teile |
| Ethanol | 3,5 Teile |
| Polyvinylacetat (Erweichungspkt. 80°C) | 6,0 Teile |
| Butyl-/Methylmethacrylat (Tg:80°C) | 8,0 Teile |
| Ethylmethacrylatharz (Tg:63°C) | 3,0 Teile |
| Methacrylatcopolymere (Tg: 80°C) | 5,0 Teile |
| Ungesättigtes Polyesterharz (Erweichungspkt. 103°C) | 3,5 Teile |
| Siliciumdioxid | 3,5 Teile |

Die Transferfolien - im konkreten Fall hier Heißprägefolien - werden jeweils vorzugsweise in herkömmlicher Weise auf ein Substrat aufgebracht, und zwar derart, daß die Kleberschicht 6 der Substratoberfläche zugewandt ist. Die Kleberschicht 6 bildet beim Heißprägen sodann eine Klebeverbindung mit der Substratoberfläche. Der Trägerfilm 1 wird sodann - nach dem unter Wärmeeinwirkung beim Heißprägen Erweichen der Ablöseschicht 2 - abgezogen. Bei der derart auf der Substratoberfläche aufgebrachten Heißprägefolie bildet sodann die Schutzschicht 3 die obere vom Substrat abgewandte Oberfläche der Prägefolie.

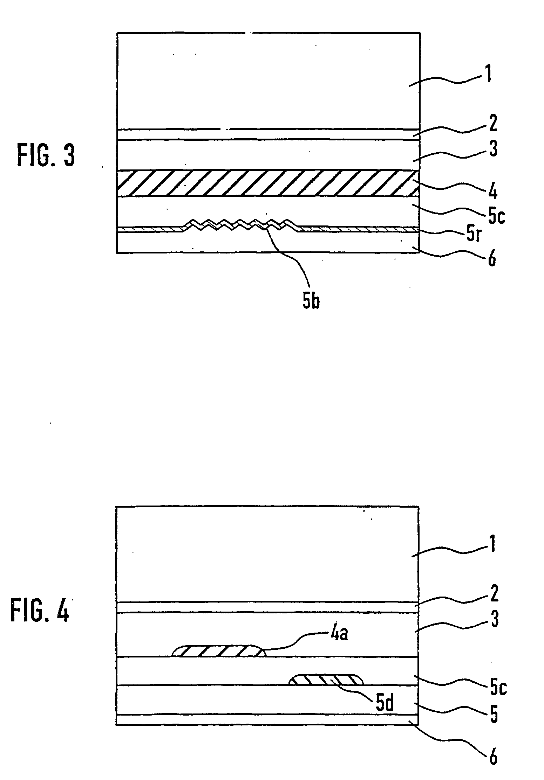

Die in den Figuren 2 bis 4 dargestellten Heißprägefolien weisen eine gegenüber der Folie in Figur 1 anders ausgebildete Hintergrundschicht auf. Bei dem Beispiel in Figur 2 ist die Hintergrundschicht als Reflexionsschicht 5r ausgebildet. In einem Sonderfall ist die Reflexionsschicht als metallische Reflexionsschicht ausgebildet. Die Reflexionsschicht kann für bestimmte Spektralbereiche transparent bzw. teiltransparent sein. Sie kann einen höheren Brechungsindex als die anderen Schichten aufweisen und weist deshalb erhöhte Lichtreflexion auf. Bei dem Beispiel in Figur 3 ist eine Schicht 5c vorgesehen als eine zusätzliche Lackschicht, die vorzugsweise transparent ist. Ferner ist eine Reflexionsschicht 5r vorgesehen, die bereichsweise eine Diffraktions- oder Hologrammstruktur 5b aufweist. Bei dem Ausführungsbeispiel in Figur 3 ist diese Struktur 5b als Bestandteil der Lackschicht 5c und der Kleberschicht 6 sowie der dazwischenliegenden Schicht ausgebildet. Alternativ oder zusätzlich kann eine Diffraktionsstruktur auch als Bestendteil der Lackschicht 5c und/oder der lasersensitiven Farblackschicht 4 und/oder der Kleberschicht 6 ausgebildet sein. Die Diffraktionsstruktur kann in diesen Fällen wie dargestellt bereichsweise, aber auch als durchgehende Schicht ausgebildet sein.

Bei dem Beispiel in Figur 4 ist in der Hintergrundschicht 5c in einem begrenzten Bereich ein Druckbild 5d und in der lasersensitiven Schicht seitlich versetzt zu diesem ein begrenzter lasersensitiver Bereich 4a angeordnet.

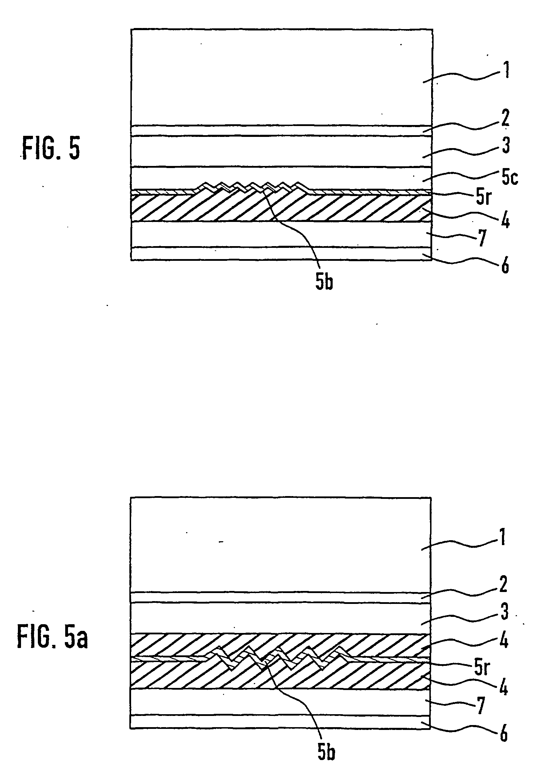

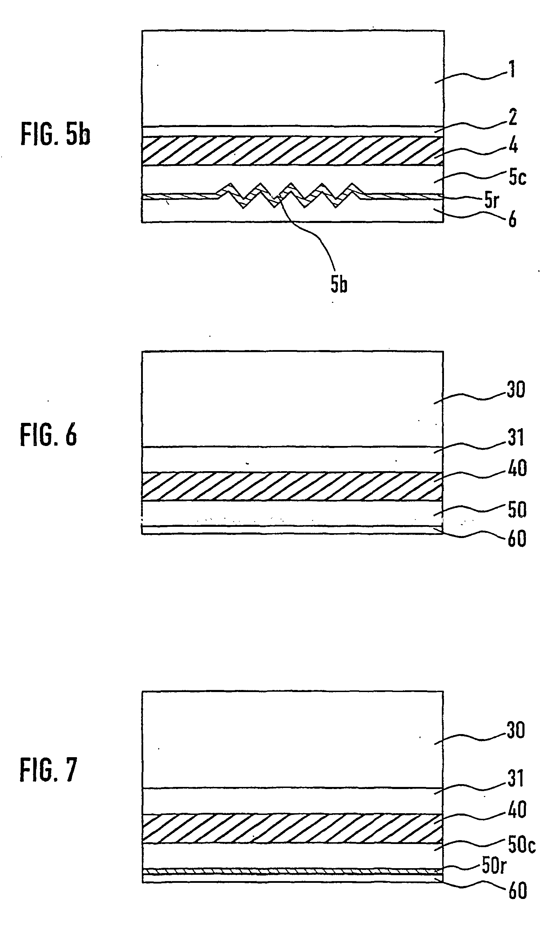

In Fig. 5 ist eine Heißprägefolie mit einem abgewandelten Schichtenaufbau gezeigt. Der Schichtenaufbau ist ähnlich dem in Fig. 3, wobei jedoch die Reihenfolge der Schichten abgewandelt ist und zwar derart, daß die lasersensitive Schicht 4 auf der zum Substrat gewandten Seite der Reflexionsschicht 5 angeordnet ist. Die Schichten liegen in folgender Reihenfolge aufeinander:

Ein Trägerfilm 1, eine Ablöseschicht 2, eine Schutzschicht 3, eine Zwischenschicht 5c, eine Reflexionsschicht 5, eine lasersensitive Schicht 4, eine Hintergrundschicht 7 und eine Kleberschicht 6. In den aneinander angrenzenden Bereichen von lasersensitiver Schicht 4, Reflexionsschicht 5 und Zwischenschicht 5c ist eine Diffraktionsstruktur 5b ausgebildet. Sie kann als Beugungsgitter ausgebildet sein. Alternativ kann die Struktur 5b auch als Hologrammstruktur ausgebildet sein. Bei dem dargestellten Ausführungsbeispiel in Fig. 5 wird die Diffraktionsstruktur 5b bei der Herstellung der Folie ausgebildet, indem die Diffraktionsstruktur zunächst in die Zwischenschicht 5c eingeprägt wird, sodann die Reflexionsschicht 5r, z. B. durch Aufdampfen aufgebracht wird. Die Reflexionsschicht 5 ist in den Abschnitten außerhalb der Diffraktionsstruktur als glatte Reflexionsschicht 5r ausgebildet. Sie hat vorzugsweise eine Schichtdicke von < 1 µm. Sie ist in bestimmten Betrachtungswinkeln zumindest für bestimmte Spektralbereiche transparent oder teiltransparent. Nach dem Aufbringen der Reflexionsschicht 5r wird die lasersensitive Schicht 4 aufgebracht. Die so hergestellte Diffraktionsstruktur 5b ist in den aneinander unmittelbar angrenzenden Bereichen der Schichten 5c und 4 ausgebildet. Bei der Betrachtung der Diffraktionsstruktur ergeben sich in Abhängigkeit vom Beleuchtungs- und Betrachtungswinkel variierende optische Effekte.

Bei der Folie in Figur 5a liegen die Schichten in folgender Reihenfolge: Trägerschicht 1, Ablöseschicht 2, Schutzschicht 3, lasersensitive Schicht 4, Reflexionsschicht 5r, lasersensitive Schicht 4, zusätzliche Lackschicht 7 und Kleberschicht 6. Die beiderseits der Reflexionsschicht 5r ausgebildeten lasersensitiven Schichten 4 können identisch ausgebildet sein, d.h. die Reflexionsschicht ist dann in dieser lasersensitiven Gesamtschicht angeordnet. Die lasersensitiven Schichten können jedoch auch unterschiedlich ausgebildet sein. In einander angrenzenden Bereichen der lasersensitiven Schichten 4 und der Reflexionsschicht 5r ist eine Diffraktionsstruktur 5b ausgebildet. Alternativ kann die Struktur 5b auch als Hologrammstruktur ausgebildet sein. Erhöhte Fälschungssicherheit ergibt sich bei diesem Ausführungsbeispiel dadurch, daß zwei lasersensitive Schichten an die Diffraktions- bzw. Hologrammstruktur angrenzen, die gleich oder verschieden ausgebildet sein können. Die Lackschicht 7, die optional ist, ist hierbei als transparente Schicht bzw. als helle Backupschicht ausgebildet. Alternativ können auch die Lackschicht 7 und die Kleberschicht 6 entfallen und die in Fig. 5a unter der Reflexionsschicht 5r dargestellte zweite lasersensitive Schicht 4 als lasersensitive Kleberschicht ausgebildet sein.

Bei der Folie in Figur 5b liegen die Schichten in folgender Reihenfolge: Trägerfilm 1, Ablöseschicht 2, lasersensitive Schicht 4, zusätzliche Lackschicht 5c, Reflexionsschicht 5r, Kleberschicht 6. Die Schichten 5c und 6 können aus identischem Material oder verschiedenem Material ausgebildet sein. Bei der lasersensitiven Schicht 4 handelt es sich bei diesem Ausführungsbeispiel um eine Schutzlackschicht, die lasersensitiv ausgebildet ist, indem sie die betreffenden vergleichbaren Pigmente enthält. In den aneinander angrenzenden Bereichen von zusätzlicher Lackschicht 5c, Reflexionsschicht 5r und Kleberschicht 6 ist eine Diffraktionsstruktur ausgebildet. Sie kann als Beugungsgitter ausgebildet sein. Alternativ kann die Struktur 5b auch als Hologrammstruktur ausgebildet sein.

Nachdem die Transferfolie, im vorliegenden Falle Prägefolie, auf dem Substrat aufgebracht ist, erfolgt die Laserbehandlung, um transparente und/oder farbige Markierungen in der lasersensitiven Schicht 4 zu erzeugen. Um an einer bestimmten Position in der lasersensitiven Schicht 4 eine bestimmte Markierung, vorzugsweise Farbmarkierung zu erzeugen, wird diese Stelle mit Laserstrahlung bestrahlt.

Im Falle der Laserbehandlung einer Folie mit dem Schichtenaufbau gemäß Fig. 5 erfolgt die Laserbestrahlung durch die Reflexionsschicht inklusive der diffraktiven Struktur 5b hindurch. Der Laserstrahl wird bevorzugt senkrecht auf die Folienebene von oben her gerichtet. Die Reflexionsschicht 5r ist für die Laserstrahlung durchlässig, insbesondere bei Senkrechteinstrahlung. Auch die Gitter- oder Hologrammstruktur 5b der im übrigen Bereich die Reflexionsschicht 5r bildenden Schicht ist für die Laserstrahlung durchlässig, wobei die Strahlung jedoch an der Diffraktionsstruktur mehr oder weniger auch und zum Teil reflektiert werden kann. Die unter der im übrigen Bereich die Reflexionsschicht 5r bildenden Schicht noch innerhalb der Diffraktionsstruktur 5b und darunter angeordnete lasersensitive Schicht 4 wird durch die Lasereinwirkung verändert, indem an der bestimmten Stelle eine Farbveränderung durch Bleichen oder selektiven Farbumschlag erfolgt.

Im Folgenden wird der Bleichvorgang, wie er bei den dargestellten Ausführungsbeispielen in der jeweiligen lasersensitiven Schicht abläuft, beschrieben.

Beim Bleichen wird in einem ersten Schritt eine blaue oder grüne oder rote Farbmarkierung erzeugt, indem diese Stelle mit einer bestimmten Laserwellenlänge bestrahlt wird, mit der eine bestimmte Pigmentkomponente gebleicht wird. Um die Farbe Blau zu erzeugen, muß die Gelb-Pigmentkomponente gebleicht werden. Hierfür wird blaues Laserlicht eingesetzt. Für das Bleichen ist eine bestimmte Mindestintensität erforderlich. Ferner darf eine gewisse Pulsdauer nicht überschritten werden. Um im ersten Schritt eine grüne Farbmarkierung zu erhalten, muß die Magenta-Pigmentkomponente gebleicht werden. Hierfür wird grünes Laserlicht eingesetzt. Um im ersten Schritt eine rote Farbmarkierung zu erhalten, muß die Cyan-Pigmentkomponente gebleicht werden. Hierfür wird rotes Laserlicht eingesetzt.

Um an dieser Stelle eine Farbmarkierung in der Farbe Cyan oder Magenta oder Gelb zu erzeugen, wird diese Stelle in einem zweiten Schritt laserbehandelt, und zwar mit einer Laserwellenlänge, mit der eine der an dieser Stelle noch nicht gebleichte Pigmentkomponente gebleicht wird. Wenn im ersten Schritt eine blaue Farbmarkierung erzeugt worden ist, sind an dieser Stelle die Cyan-Pigmentkomponente und die Magenta-Pigmentkomponente ungebleicht. Um die Farbe Cyan an dieser Stelle zu erzeugen, muß die Magenta-Pigmentkomponente in diesem zweiten Schritt gebleicht werden. Dies erfolgt mit grünem Laserlicht. Es ergibt sich damit an dieser Stelle eine cyanfarbene Markierung. Falls in dem zweiten Schritt anstelle dieser cyanfarbenen Markierung eine magentafarbene Markierung erhalten werden soll, muß die im ersten Schritt erzeugte blaue Farbmarkierung mit rotem Laserlicht behandelt werden. Dadurch wird das Cyan-Pigment an dieser Stelle gebleicht, so daß also das Magenta-Pigment ungebleicht an dieser Stelle verbleibt. Es ergibt sich damit die magentafarbene Markierung an dieser Stelle.

In entsprechender Weise lassen sich aus einer im ersten Schritt erzeugten grünen Farbmarkierung, die aus dort verbliebenem ungebleichten Cyan-Pigment und Gelb-Pigment gebildet wird, eine cyanfarbene Markierung oder eine gelbfarbene Markierung erzeugen, und zwar durch Behandlung mit blauem Laserlicht bzw. rotem Laserlicht.

In entsprechender Weise kann eine im ersten Schritt erzeugte rote Farbmarkierung im zweiten Schritt in eine gelbe oder magentafarbene Markierung umgewandelt werden, und zwar durch Laserbehandlung im zweiten Schritt mit grünem Laserlicht bzw. blauem Laserlicht.

Um an der im ersten und zweiten Schritt behandelten Stelle eine transparente Stelle zu erhalten, d.h. eine weiße Stelle zu erhalten, wenn die Hintergrundschicht 5 weiß ist, muß in einem dritten Schritt diese Stelle mit einem Laserstrahl behandelt werden, dessen Wellenlänge so eingestellt ist, daß die an dieser Stelle nach dem zweiten Schritt ungebleicht verbliebene Pigmentkomponente gebleicht wird, d.h. die gelbe Farbmarkierung muß mit blauem Laserlicht, die magentafarbene Markierung mit grünem Licht und die cyanfarbene Markierung mit rotem Laserlicht gebleicht werden.

In gleicher Weise werden sodann in der lasersensitiven Schicht 4 weitere benachbarte Stellen behandelt, um weitere Farbmarkierungen in der Schicht 4 der Prägefolie zu erzeugen. Auf diese Weise kann ein Vollfarbenbild hergestellt werden.

Laserbehandlung kann auch eingesetzt werden, um in dem Farbmittel bzw. den Farbmitteln in der lasersensitiven Schicht durch Farbumschlag Farbmarkierungen bzw. ein Vollfarbenbild zu erzeugen. Die Laserbehandlung kann in entsprechender Weise mit aufeinanderfolgenden Verfahrensschritten erfolgen. Als Farbmittel, d.h. farbgebende Substanzen kommen Pigmente in Frage. Diese sind meist unlöslich und es handelt sich in der Regel um anorganische Substanzen. Als Farbmittel kommen aber auch meist lösliche, organische Farbmittel in Frage. Der Farbumschlag erfolgt jeweils bei spezifischen Laserbedingungen, die bei der Laserbehandlung in den einzelnen Schritten dann angewandt werden.

Die Laserbehandlung der Transfer- bzw. Prägefolie zur Erzeugung der Farbmarkierungen kann alternativ auch vor dem Aufbringen der Folie erfolgen, und zwar insbesondere dann, wenn die Schutzschicht 3 und/oder die Zwischenschicht 5c als eine für Laserstrahlung nicht transparente Schicht oder eine für Laserstrahlung im bestimmten Wellenlängenbereich nicht transparente Schicht ausgebildet ist oder eine zusätzliche UV-absorbierende Schutzschicht vorgesehen ist. Die Laserbehandlung erfolgt dann vor dem Auftragen der Folie, indem der Laserstrahl auf die Rückseite der Folie, d.h. auf die Hintergrundschicht 5 bzw. die Kleberschicht 6 gerichtet wird und somit die lasersensitive Schicht 4 also von der anderen Seite her behandelt wird, um darin die Farbmarkierungen in gleicher Weise zu erzeugen. Die Hintergrundschicht 5 und die Kleberschicht 6 sind bei diesen Anwendungen für die betreffende Laserstrahlung transparent oder zumindest teiltransparent.

In entsprechender Weise können Farbmarkierungen auch in Laminierfolien erzeugt werden. Solche Laminierfolien sind in den Figuren 6 bis 10 dargestellt. Die Laminierfolie in Figur 6 umfaßt eine sog. Overlay-Folie 30, eine optionale Zwischenschicht 31, eine lasersensitive Schicht 40, eine eine Hintergrundschicht bildende Zwischenschicht 50, die ebenfalls optional ist, und eine Kleberschicht 60, die ebenfalls optional ist. Beim Laminiervorgang wird die Laminierfolie mit der Kleberschicht 60 der Substratoberfläche zugewandt auf das Substrat aufgebracht.

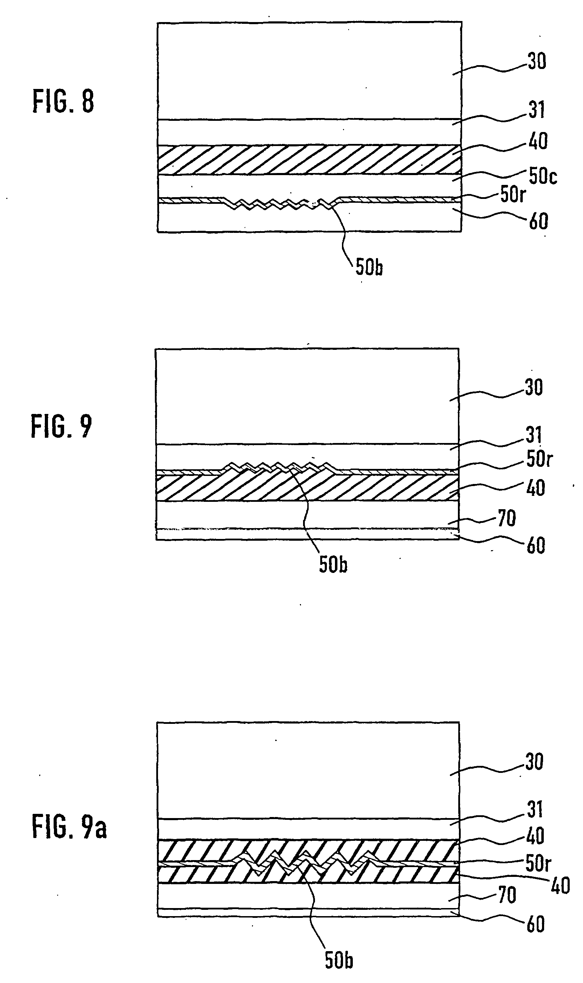

Über die Kleberschicht 60 wird eine Klebeverbindung mit der Substratoberfläche ausgebildet. Die Overlay-Folie 30 bildet sodann die obere Schutzschicht, deren vom Substrat abgewandte Oberfläche die äußere Oberfläche der Folie bildet. Die Overlay-Folie 30 verbleibt also nach dem Aufbringen der Laminierfolie dort aufgebracht. Sie entspricht der Schutzschicht 3 der Prägefolie in Figur 1. Die lasersensitive Schicht 40 entspricht der lasersensitiven Schicht 4, d.h. der ersten Lackschicht 4 der Prägefolie in Figur 1. Die Zwischenschicht 50 entspricht der Hintergrundschicht 5, d.h. der zweiten Lackschicht 5 der Prägefolie in Figur 1. Die Kleberschicht 60 entspricht der Kleberschicht 6 der Prägefolie in Figur 1. Die Laminierfolien in den Figuren 7 und 8 stellen Abwandlungen der Laminierfolie in Figur 6 dar, bei denen die Hintergrundschicht in entsprechender Weise wie die Hintergrundschicht bei den Heißprägefolien in den Figuren 2 und 3 abgewandelt ist.

Die Laminierfolie in Figur 9 weist einen Schichtenaufbau mit gegenüber Figur 6 bis 8 abgewandelter Reihenfolge der aufeinander liegenden Schichten auf. Die Reihenfolge der Schichten entspricht dem Aufbau der Heißprägefolie in Fig. 5. Hierbei ist die Schicht 70 eine optionale Hintergrundschicht.

Figur 9a zeigt ein gegenüber dem Ausführungsbeispiel in Figur 9 abgewandeltes Ausführungsbeispiel mit einer Reihenfolge der Schichten entsprechend dem Aufbau der Heißprägefolie in Figur 5a.

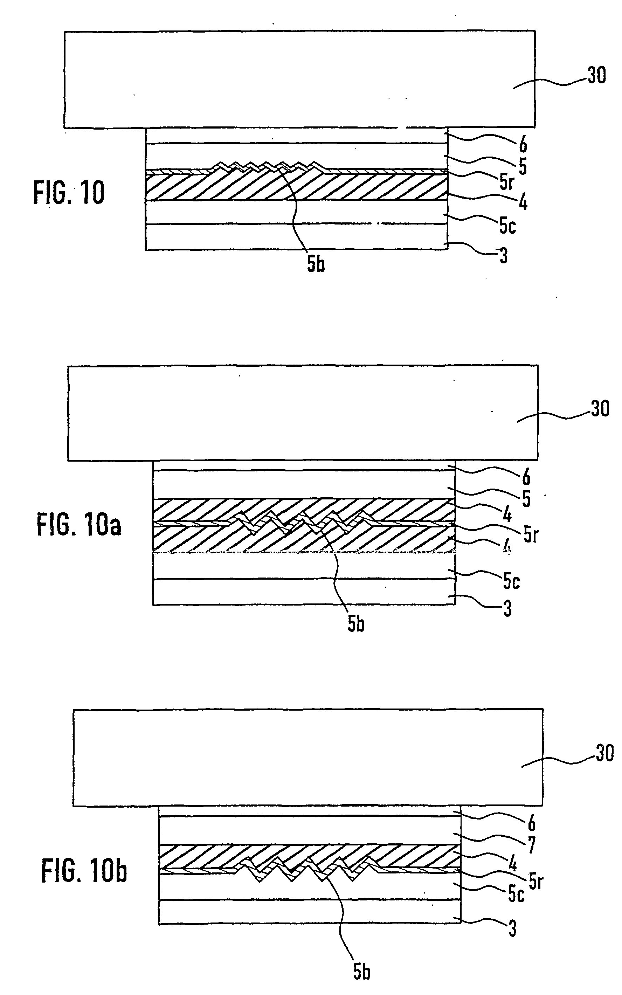

Die Laminierfolie in Figur 10 stellt eine Abwandlung der Laminierfolie in Figur 9 dar. Bei diesem Ausführungsbeispiel ist die Overlay-Folie 30 mit einer darauf aufgebrachten Heißprägefolie versehen. Diese dort aufgebrachte Heißprägefolie ersetzt die bei der Laminierfolie in Fig. 9 vorgesehenen Schichten 31, 50 bzw. 50r, 40, 70 und 60 durch die entsprechenden Schichten der Heißprägefolie. Bei der zur Herstellung dieser Laminierfolie verwendeten Heißprägefolie ist im Unterschied zu der Prägefolie in Fig. 5 die Reflexionsschicht 5r und die lasersensitive Schicht 4 in umgekehrter Reihenfolge angeordnet, so daß bei der Laminierfolie in Fig. 10 nun entsprechend wie bei der Laminierfolie der Figur 9 die Reflexionsschicht 5r auf der vom Substrat abgewandten Seite der lasersensitiven Schicht 4 angeordnet ist. Übereinstimmend wie bei den übrigen dargestellten Ausführungsbeispielen ist die Diffraktionsstruktur 5b bei der Laminierfolie in Fig. 10 ebenfalls in den aneinander angrenzenden Bereichen der Schichten 4 und 5 ausgebildet. Die Lackschicht 5 ist hierbei als transparente Schicht ausgebildet.

Die Laminierfolie in Figur 10a ist ähnlich aufgebaut wie die Laminierfolie in Figur 10. Bei dem Ausführungsbeispiel in Figur 10a ist jedoch die Overlayfolie 30 mit einer darauf aufgebrachten Heißprägefolie versehen, die ähnlich aufgebaut ist, wie die Heißprägefolie des Ausführungsbeispiels in Figur 5a. Diese auf die Overlayfolie 30 aufgebrachte Heißprägefolie ersetzt die bei der Laminierfolie in Figur 9a vorgesehenen Schichten 31, 40, 50, 50r, 40, 70 und 60 durch die entsprechenden Schichten der Heißprägefolie. Die Laminierfolie in Figur 10a weist eine Schichtenfolge mit folgender Reihenfolge auf: Overlayfolie 30, Kleberschicht 6, optionale Lackschicht 5, lasersensitive Schicht 4, Reflexionsschicht 5r, lasersensitive Schicht 4, zusätzliche Lackschicht 5c und Schutzschicht 3. Die beiderseits der Reflexionsschicht 5r ausgebildeten lasersensitiven Schichten 4 können identisch ausgebildet sein, d.h. die Reflexionsschicht 5r ist dann in dieser lasersensitiven Gesamtschicht angeordnet. Die lasersensitive Schichten 4 können jedoch auch unterschiedlich ausgebildet sein. Die Lackschicht 5 ist hierbei als transparente Schicht bzw. als helle Backupschicht ausgebildet.

Die Laminierfolie in Figur 10b stellt ein Ausführungsbeispiel dar, bei dem ebenfalls auf der Overlayfolie 30 eine Heißprägefolie aufgebracht ist. Diese aufgebrachte Heißprägefolie ist ähnlich ausgebildet wie die Folie in Figur 5. Sie ersetzt die bei der Laminierfolie in Figur 9a vorgesehenen Schichten 31, 40, 50 bzw. 50r, 40, 70 und 60 durch die Schichten der Heißprägefolie. Die Laminierfolie in Figur 10b weist eine Schichtenfolge mit folgender Reihenfolge auf: Overlayfolie 30, Kleberschicht 6, optionale Lackschicht 7, lasersensitive Schicht 4, Reflexionsschicht 5r, zusätzliche Lackschicht 5c und Schutzschicht 3. Die Lackschicht 7 ist hierbei als transparente Schicht bzw. als helle Backupschicht ausgebildet.

Die Laserbehandlung der Laminierfolie erfolgt in entsprechender Weise wie für die Prägefolie beschrieben, d.h. durch entsprechendes sukzessives Bleichen bzw. lasersensitiven Farbumschlag der in der lasersensitiven Schicht 4 enthaltenen Farbmittel, d.h. Pigmentkomponenten oder anderen lasersensitiven Farbmittel.

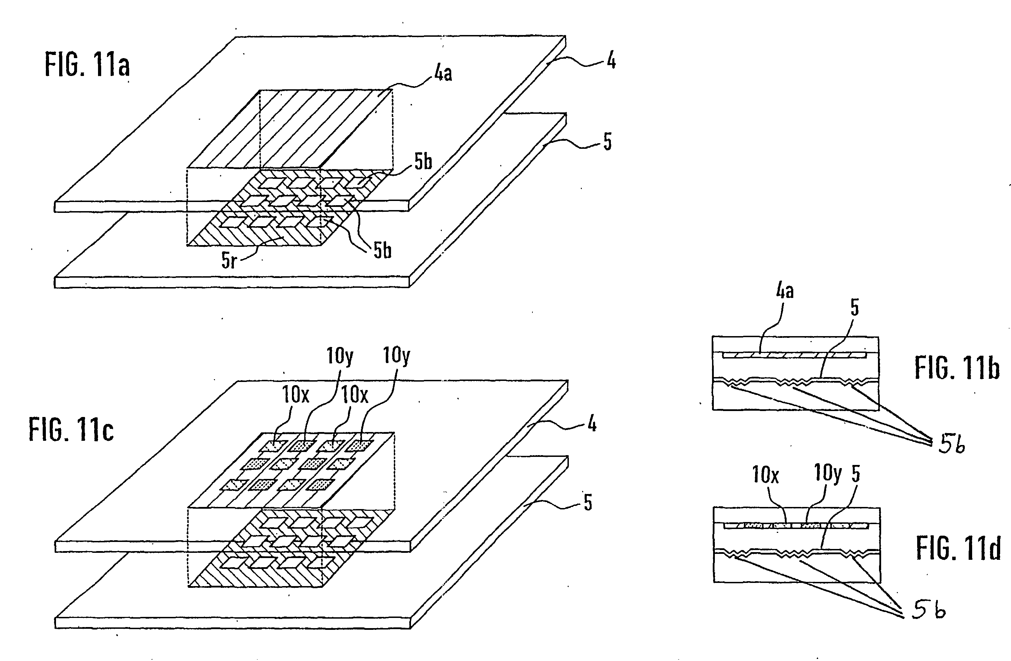

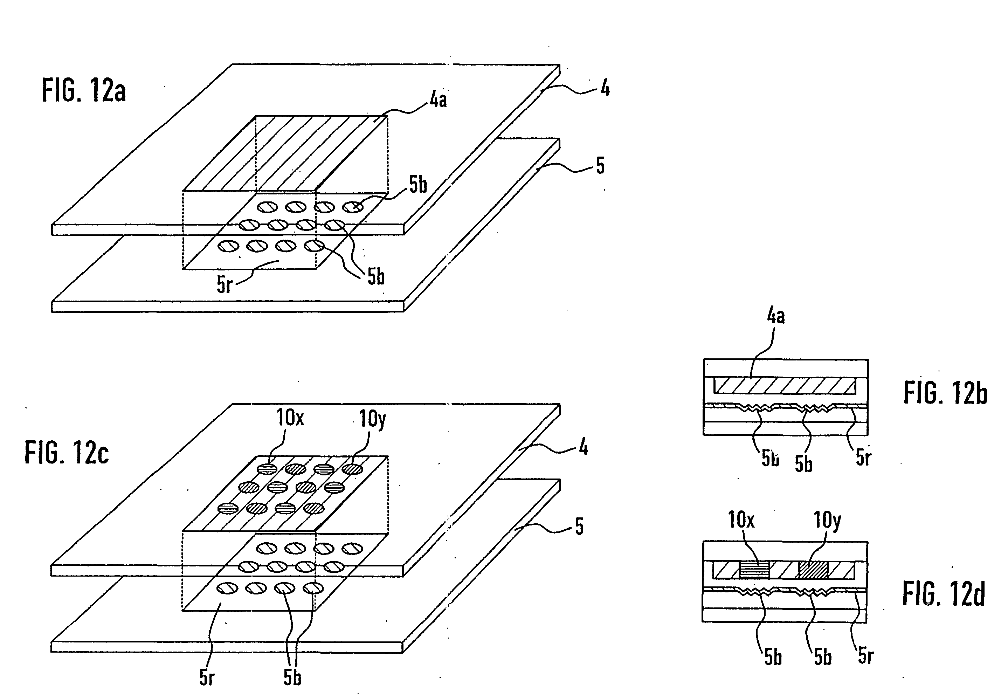

Im Folgenden werden anhand der Fig. 11 bis 16 bevorzugte Ausführungsbeispiele beschrieben. Bei den Ausführungsbeispielen sind vorzugsweise Transferfolien mit einem Aufbau entsprechend den Fig. 1 bis 5 oder Laminierfolien mit einem Aufbau entsprechend den Fig. 6 bis 10 eingesetzt. Die Fig. 11 und 12 zeigen den Schichtenaufbau nur stark schematisiert, wobei jeweils lediglich eine obere Schicht und eine untere Schicht dargestellt ist. Es ist eine lasersensitive Schicht 4 und eine parallel dazu angeordnete weitere Schicht dargestellt, die als Reflexionsschicht 5r ausgebildet ist und bereichsweise eine Diffraktionsstruktur aufweist. In den an die Gitterstruktur angrenzenden Schichten ist die Diffraktionsstruktur 5b ausgebildet.

Bei dem in den Fig. 11 a bis d dargestellten Ausführungsbeispiel wird von einer Folie ausgegangen, bei der die lasersensitive Schicht 4 mehr oder weniger deckend grün oder in einer anderen Farbe im Bereich 4a ausgebildet ist. Die Hintergrundschicht 5 weist im darunter liegenden Bereich eine Reflexionsschicht mit Diffraktionsstruktur 5b auf. Die Hintergrundschicht 5 kann als Metallschicht ausgebildet sein, die unmittelbar unter der lasersensitiven Schicht, vorzugsweise auf diese aufgedampft, ausgebildet sein kann. Durch Laserstrahlung werden positionsgenau in der lasersensitiven Schicht 4a separate Markierungen in Form von alternierenden, voneinander beabstandeten quadratischen Feldern 10x und 10y ausgebildet. Durch entsprechende Laserbehandlung bei unterschiedlichen Bedingungen wird erreicht, daß die Felder 10x blau, vorzugsweise cyan und die Felder 10y gelb ausgebildet sind. Der Bereich um die Felder 10x, 10y wird nicht laserbehandelt und verbleibt in der ursprünglichen Farbe, d.h. z.B. grün. Durch positionsgenaue Führung des Laserstrahls ist es möglich, die Felder 10x, 10y positionsgenau relativ zu den diffraktiven Bereichen auszubilden. Die Felder 10x, 10y sind mehr oder weniger transparent, so daß aufgrund der Lichtbeugung an den diffraktiven Strukturen 5b ein Farbenspiel entsteht, abhängig von den ggf. überlagernden Farben und der wellenlängenabhängigen Reflexion des eingestrahlten Lichtes. Dadurch, daß die Untergrundschicht 5 alternierende, - passend genau zu den laserinduzierten Feldern 10x, 10y angeordnete - diffraktive Felder 5b und metallisch spiegelnd erscheinende Bereiche aufweist, ergeben sich in Verbindung mit den durch die Laserbestrahlung gefärbten Flächen in Abhängigkeit vom Beleuchtungs- und Betrachtungswinkel variierende Bildeindrücke.

Bei einer besonderen Ausführung des in Fig. 11 dargestellten Ausführungsbeispiels kann vorgesehen sein, daß die Metallschicht lediglich in getrennten einzelnen Bereichen 5r als Reflexionsschicht ausgebildet ist und der gesamte übrige Bereich als Gitterstruktur ausgebildet ist. Die lasersensitive Schicht 4 kann durch Lasereinwirkung so bestrahlt werden, daß alternierende Felder 10x, 10y unterschiedlich gebleicht werden, d.h. unterschiedliche Farbe erhalten werden. Diese die laserinduzierten Farbmarkierungen bildenden Felder 10x, 10y können so angeordnet werden, daß sie in Richtung senkrecht zur Schichtenebene betrachtet fluchtend über den Reflexionsfeldern 5a angeordnet sind. Je nach Beleuchtungs- und Betrachtungswinkel ergeben sich dabei variierende optische Effekte.

Bei einem abgewandelten in Figur 12 dargestellten Ausführungsbeispiel sind in der lasersensitiven Schicht 4 durch lasersensitives Bleichen kreisrunde Felder 10x, 10y in alternierender Reihenfolge in unterschiedlicher Farbe ausgestaltet. Sie sind positionsgenau in senkrechter Richtung zur Schichtebene betrachtet fluchtend über Diffraktionsfeldern 5b angeordnet, welche ebenfalls in Draufsicht runden Umriß aufweisen. Die Diffraktionsfelder sind in einer Reflexionsschicht 5r ausgebildet, die unter der lasersensitiven Schicht 4 vorzugsweise unmittelbar darunter angeordnet ist.

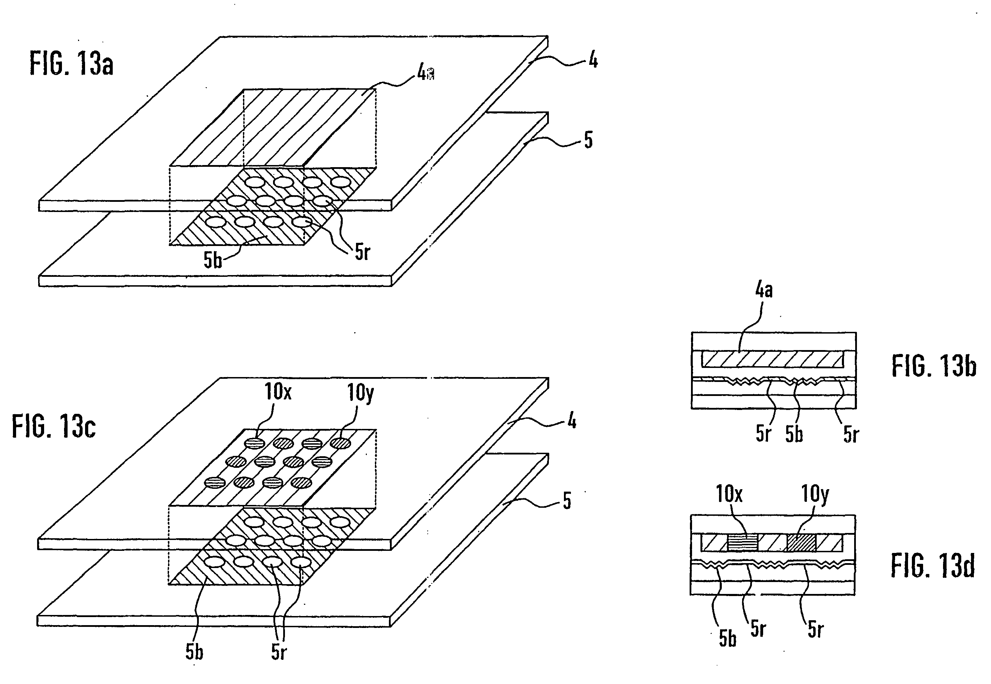

Fig. 13 zeigt ein gegenüber Fig. 12 dahingehend abgewandeltes Ausführungsbeispiel, daß in der Diffraktionsstruktur 5b runde ebene Reflexionsfelder 5r ausgebildet sind und die ebenfalls runden laserinduzierten Felder 10x, 10y positionsgenau über den runden ebenen Reflexionsfeldem 5r angeordnet sind.

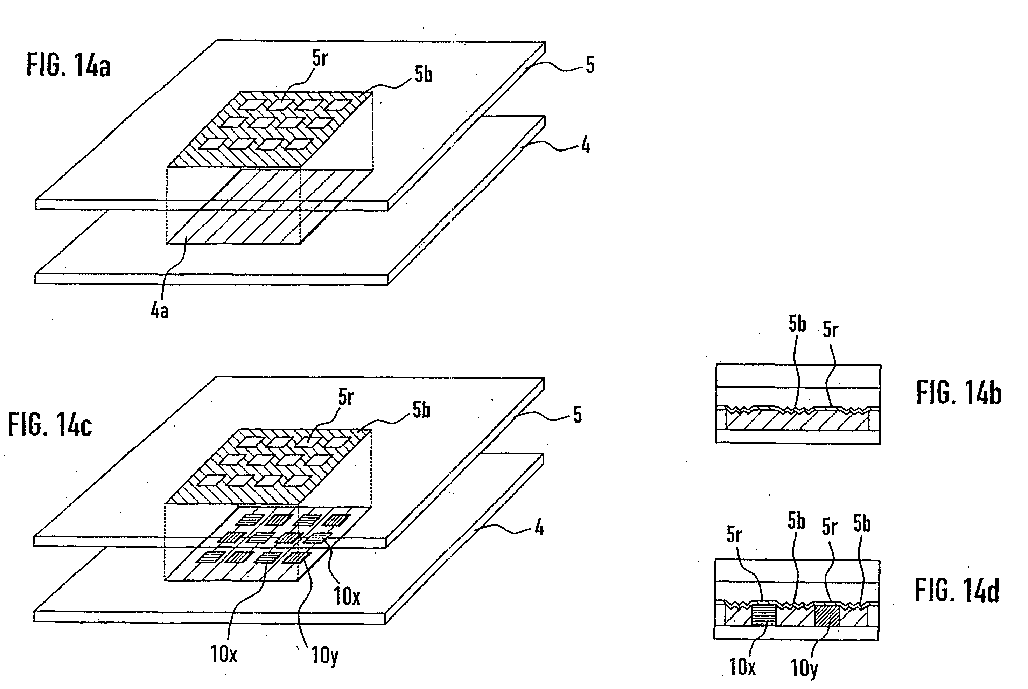

Bei dem in den Fig. 14a bis d dargestellten Ausführungsbeispiel wird von einer Folie ausgegangen, bei der die teiltransparente Reflexionsschicht 5 über der lasersensitiven Schicht 4 angeordnet ist. Die lasersensitive Schicht 4 ist mehr oder weniger deckend z.B. grün oder in einer anderen Farbe im Bereich 4a ausgebildet. Die Reflexionsschicht 5 weist eine bereichsweise Diffraktionsstruktur 5b auf, wobei in voneinander getrennten einzelnen Feldern 5r die Reflexionsschicht 5 als ebene Schicht ohne Diffraktionsstruktur ausgebildet ist. Die Reflexionsschicht 5 ist unmittelbar auf der lasersensitiven Schicht 4 aufgedampft aufgebracht. Die Diffraktionsstruktur 5b ist in der Reflexionsschicht und der lasersensitiven Schicht 4 ausgebildet und erstreckt sich in die lasersensitive Schicht 4 hinein.

Durch Laserbestrahlung durch die Reflexionsschicht 5 hindurch ausschließlich im Bereich der ebenen Reflexionsfelder 5r bei positionsgenauer Führung des Laserkopfes werden positionsgenau in der darunter liegenden lasersensitiven Schicht 4 separate Markierungen in Form von alternierenden voneinander beabstandeten quadratischen Feldem 10x und 10y ausgebildet. Diese laserinduzierten Markierungen in Form der quadratischen Felder 10x und 10y liegen bei dem Ausführungsbeispiel in Figur 14 jeweils exakt fluchtend und passergenau hinsichtlich ihrer Größe und Position unter den ebenen Reflexionsfeldern 5r der Reflexionsschicht 5. Durch entsprechende Laserbehandlung bei unterschiedlichen Bedingungen wird erreicht, daß die Felder 10x und 10y in unterschiedlicher Farbe ausgebildet sind, z.B. die Felder 10x cyan und die Felder 10y gelb. Der Bereich um die Felder 10x, 10y herum wird nicht laserbehandelt und verbleibt in der ursprünglichen Farbe, d.h. z.B. grün.

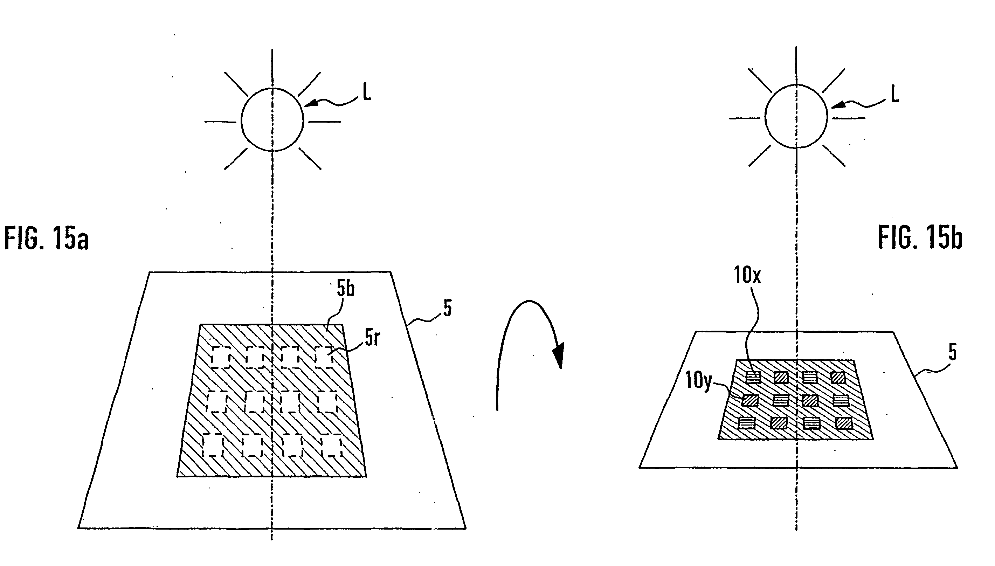

Aufgrund der Lichtbeugung an der diffraktiven Struktur 5b in Verbindung mit den unterschiedlichen Farben der Felder 10x, 10y entsteht ein Farbenspiel, das abhängig ist von der Beleuchtungsart und dem Beleuchtungs- und Betrachtungswinkel abhängig von der Lichtquelle L. Es ergeben sich dabei jeweils variierende Bildeindrücke. Das Diffraktionsbild bzw. das laserinduzierte Farbbild wird wechselweise sichtbar, z. B. bei Kippbewegung der Folie, wodurch der Beleuchtungswinkel und/oder der Betrachtungswinkel verändert wird, wie in den Fig. 15a und 15b schematisch dargestellt ist. In der Stellung in Fig. 15b erscheinen die Flächen 5r farbig und die Diffraktionsstruktur ist nicht wirksam. In der Stellung in Fig. 15a ist dagegen das Diffraktionsbild sichtbar und überlagert die farbigen Flächen zumindestens teilweise.

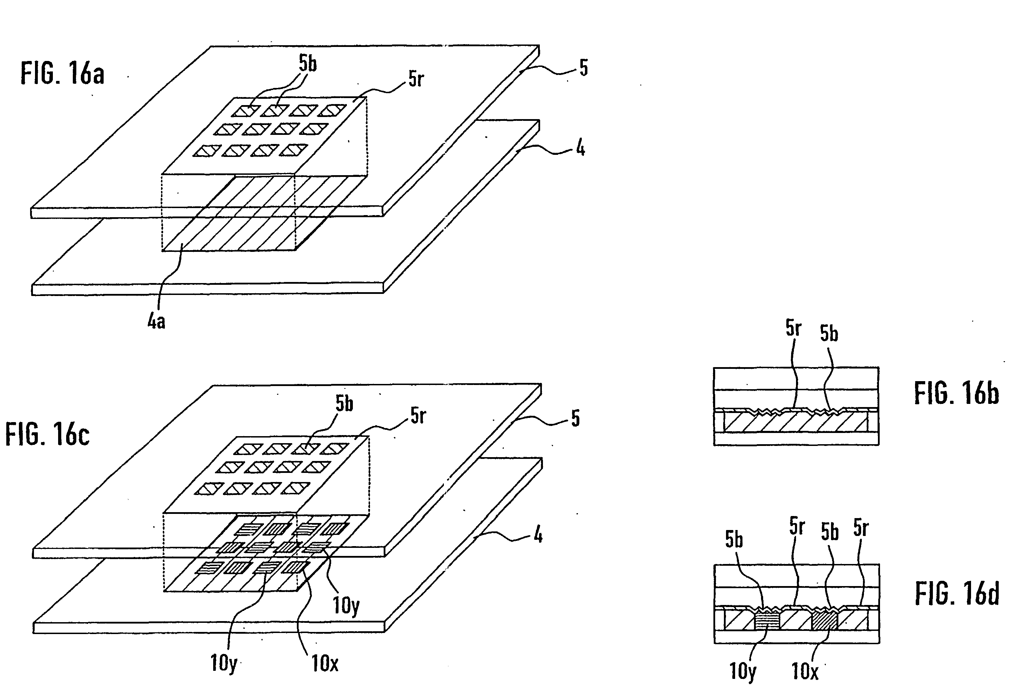

Fig. 16 zeigt ein gegenüber Fig. 14 und 15 dahingehend abgewandeltes Ausführungsbeispiel, daß in der Reflexionsschicht 5r im Grundriß rechteckige Diffraktionsfelder 5b angeordnet sind, zu denen die laserinduzierten Felder 10x, 10y passergenau positioniert sind.

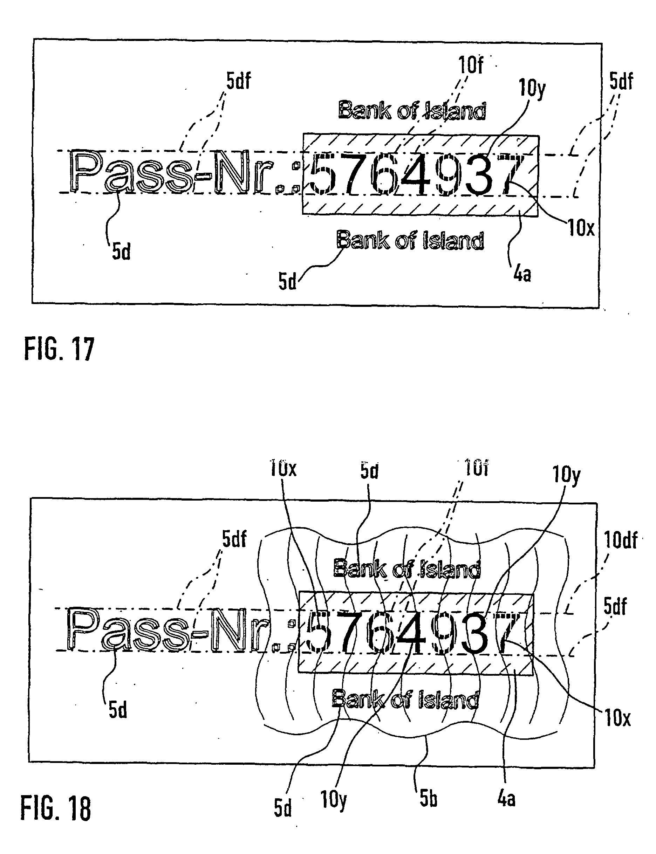

Bei dem in Fig. 17 dargestellten Ausführungsbeispiel ist das lasersensitive Material in der Schicht 4 in einem begrenzten, im Umriß rechteckigen Bereich angeordnet. Die Schicht 4 ist außerhalb des Bereichs 4a durchsichtig, so daß das in diesem Bereich in der Hintergrundschicht ausgebildete Druckbild 5d sichtbar ist. Das Druckbild 5d kann in einer separaten Hintergrundschicht der Mehrschichtenfolie oder aber auch unmittelbar auf der Substratoberfläche ausgebildet sein. Bei dem Druckbild 5d handelt es sich um das Wortbild "Bank von Island" und um das Wortbild "Pass-Nr.", letzteres ist zwischen zwei parallelen ebenfalls aufgedruckten oder nur fiktiven, d.h. nur gedachten Fluchtlinien 5df paßgenau angeordnet.

Durch positionsgenaue Führung des masselosen Laserstrahls ist es möglich, die Beschriftung mit Genauigkeit im Mikrometerbereich in Bezug auf das Druckbild 5d im lasersensitiven Bereich 4a durch selektives Bleichen oder selektiven Farbumschlag fortzusetzen. Es wird daher eine Markierung erzeugt, welche die beiden Fluchtlinien 5df des Druckbildes, die beiderseits des lasersensitiven Feldes 4a angeordnet sind oder auch nur fiktiv als gedachte Fluchtlinien existieren, in dem Feld 4a als laserinduzierte Fluchtlinien 10f fortsetzen. Zwischen den Linien 10f wird passergenau eine entsprechende laserinduzierte Beschriftung 10x, 10y im dargestellten Ausführungsbeispiel die Ziffernfolge "5764937" erzeugt. Hierbei können die einzelnen Ziffern 10x, 10y in verschiedener Farbe ausgebildet sein oder jeweils einen Farbverlauf aufweisen, z.B. durch in verschiedenen Bereichen der Ziffern unterschiedliches Bleichen oder unterschiedlichen Farbumschlag oder aufgrund entsprechender Gestaltung des darunter liegenden ggf. durchscheinenden Druckbildes. Die einzelnen Ziffern 10x, 10y können auch in Mikroschrift ausgebildet werden. Auf diese Weise wird eine hohe Fälschungssicherheit erhalten.

Bei dem Ausführungsbeispiel in Fig. 18 handelt es sich um eine Abwandlung gegenüber dem Ausführungsbeispiel in Fig. 17, wobei zur Erhöhung der Fälschungssicherheit über der lasersensitiven Schicht 4a eine Diffraktionsstruktur 5b angeordnet ist. Diese kann auf der lasersensitiven Schicht unmittelbar aufliegend ausgebildet sein, z. B. in einer Reflexionsschicht, die in diesem begrenzten Bereich dort aufgedampft ist oder in einer Reflexionsschicht, die die gesamte in Fig. 18 dargestellte Oberfläche des Ausführungsbeispiels überzieht. Diese Reflexionsschicht ist in dem dargestellten Ausführungsbeispiel lediglich in dem das lasersensitive Feld 4a übergreifenden Bereich als Diffraktionsstruktur ausgebildet, die ebenfalls transparent ist. Die Laserbehandlung erfolgt durch Laserbestrahlung durch die Reflexionsschicht bzw. die Diffraktionsstruktur 5b hindurch. In gleicher Weise wie bei dem Ausführungsbeispiel in Fig. 17 werden dabei die laserinduzierten Markierungen passergenau erzeugt. Dadurch, daß über der laserinduzierten Markierung bei dem Ausführungsbeispiel in Fig. 18 die Diffraktionsstruktur angeordnet ist und diese unmittelbar mit der betreffenden Schicht, die die Markierungen aufweist, verbunden ist, ergibt sich eine erhöhte Fälschungssicherheit.

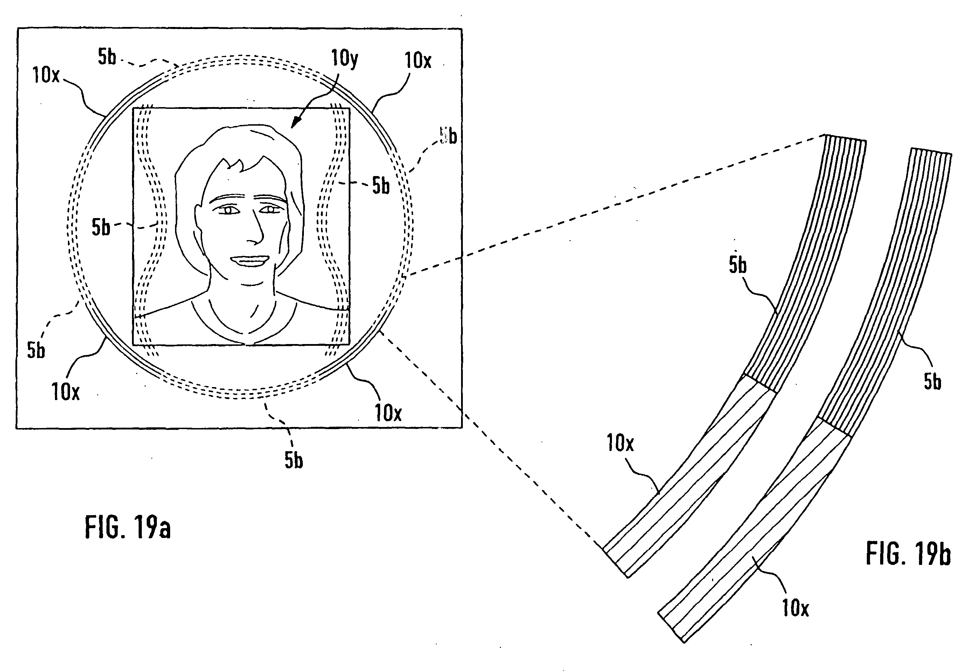

Bei dem Ausführungsbeispiel in den Fig. 19a und b ist eine passergenaue Zuordnung von diffraktiven Feldern zu laserinduzierten Farbflächen ebenfalls realisiert, wobei dieses Ausführungsbeispiel als laserinduziertes Bild 10y ein Vollfarbenporträtbild laserinduziert erzeugt aufweist. Das laserinduzierte Bild ist in einer lasersensitiven Schicht 4 ausgebildet. Es sind Diffraktionselemente 5b vorgesehen, die als Guillochen ausgebildet sind und durch jeweils daran anschließende laserinduzierte farbige Guillochen passergenau ergänzt sind. Eine derartige Struktur bestehend aus einander anschließenden bogenförmigen Bereichen, die alternierend als Diffraktions-Guillochen 5b und laserinduzierten farbigen Guillochen 10x ausgebildet sind, ist in Art eines geschlossenen Kreises um das laserinduzierte Porträtbild 10y angeordnet. In den Randbereichen des laserinduzierten Farbbildes 10y sind zusätzlich schlangenlinienförmige Diffraktions-Guillochen 5b ausgebildet, die das laserinduzierte Bild 10y abschnittsweise übergreifen.

Der Schichtenaufbau des Ausführungsbeispiels in den Fig. 19a und b ist ähnlich wie bei dem Ausführungsbeispiel in Fig. 18. Über der lasersensitiven Schicht, in der das laserinduzierte Bild 10y und die laserinduzierten Guillochen 10x angeordnet sind, sind die Diffraktionsstrukturelemente 5b angeordnet. Diese sind vorzugsweise in einer im übrigen Bereich die Reflexionsschicht 5r bildenden Schicht angeordnet, können aber auch ausschließlich und unmittelbar in der lasersensitiven Schicht 4a ausgebildet sein.

Die Laserbehandlung zur Erzeugung des laserinduzierten Vollfarbenbildes 10y und der farbigen Guillochen 10x erfolgt in entsprechender Weise wie bei den zuvor beschriebenen Ausführungsbeispielen.

## Patentansprüche

1. Mehrschichtenkörper, insbesondere Mehrschichtenfolie,
mit einer lasersensitiven Schicht (4, 40) und einem Kennzeichnungselement, z.B. Diffraktions- und/oder Hologrammstruktur (5b, 5c, 50b), Reflexionsschicht (5r, 50r), Druckbild (5d) oder dergleichen, das in einer zweiten Schicht (5, 50) und/oder in der lasersensitiven Schicht (4, 40) ausgebildet ist,
**dadurch gekennzeichnet,**
**daß** die lasersensitive Schicht (4, 40) eine durch Lasereinwirkung erzeugte Markierung (10, 10x, 10y) - im folgenden laserinduzierte Markierung (10, 10x, 10y) genannt - aufweist, die passergenau relativ zu dem Kennzeichnungselement (5r, 5b, 5c, 5d) positioniert ist.

2. Mehrschichtenkörper nach Anspruch 1,
**dadurch gekennzeichnet,**
**daß** die laserinduzierte Markierung (10, 10x, 10y) und das Kennzeichnungselement (5r, 5b, 5c, 5d), vorzugsweise optisch von außen her erkennbar, einander passergenau ergänzend ausgebildet und zugeordnet sind.

3. Mehrschichtenkörper nach einem der vorangehenden Ansprüche,
**dadurch gekennzeichnet,**
**daß** die laserinduzierte Markierung (10, 10x, 10y) und das Kennzeichnungselement (5r, 5b, 5c, 5d) in Draufsicht auf die Schichtenebene passergenau aneinander, vorzugsweise unmittelbar aneinander angrenzend in direktem Kontakt angeordnet sind.

4. Mehrschichtenkörper nach einem der vorangehenden Ansprüche,
**dadurch gekennzeichnet,**
**daß** die laserinduzierte Markierung (10 10x, 10y) und das Kennzeichnungselement (5r, 5b, 5c, 5d) vollständig oder abschnittsweise passergenau überlappend ausgebildet sind.

5. Mehrschichtenkörper nach einem der vorangehenden Ansprüche,
**dadurch gekennzeichnet,**
**daß** die laserinduzierte Markierung (10, 10x, 10y) in einer Schichtenebene über oder unter dem Kennzeichnungselement (5r, 5b, 5c, 5d) und/oder in derselben Schichtenebene wie das Kennzeichnungselement angeordnet ist.

6. Mehrschichtenkörper nach einem der vorangehenden Ansprüche,
**dadurch gekennzeichnet,**
**daß** das Kennzeichnungselement als eine in ihrer Außenkontur charakteristisch begrenzte Diffraktions- und/oder Hologrammstruktur (5b, 5c) und/oder als ein in seiner Außenkontur charakteristisch begrenztes Reflexionsfeld (5r) und/oder als ein in seiner Außenkontur charakteristisch begrenztes Druckbild (5d) ausgebildet ist.

7. Mehrschichtenkörper nach einem der vorangehenden Ansprüche,
**dadurch gekennzeichnet,**
**daß** die laserinduzierte Markierung (10, 10x, 10y) und/oder das Kennzeichnungselement (5b, 5c, 5d) linienförmig ausgebildet ist bzw. sind.

8. Mehrschichtenkörper nach Anspruch 7,
**dadurch gekennzeichnet,**
**daß** die linienförmige laserinduzierte Markierung (10, 10x, 10y) und das linienförmige Kennzeichnungselement (5b, 5c, 5d) in der Draufsicht auf die Schichtenebene als eine passergenau zusammengesetzte, vorzugsweise stetig verlaufende Linie optisch erkennbar sind.

9. Mehrschichtenkörper nach einem der vorangehenden Ansprüche,
**dadurch gekennzeichnet,**
**daß** die laserinduzierte Markierung (10, 10x, 10y) und/oder das Kennzeichnungselement relativ zu einer fiktiven oder konkret sichtbar vorhandenen Fluchtlinie ausgerichtet ist bzw. sind, wobei vorzugsweise vorgesehen ist, daß die laserinduzierte Markierung (10, 10x; 10y) und/oder das Kennzeichnungselement (5d) eine Buchstabenfolge, Ziffernfolge oder dergleichen ist.

10. Mehrschichtenkörper nach Anspruch 9,
**dadurch gekennzeichnet ,**
**daß** die hinsichtlich einer Fluchtlinie ausgerichtete laserinduzierte Markierung (10, 10x, 10y) und das hinsichtlich einer Fluchtlinie ausgerichtete Kennzeichnungselement (5b, 5c, 5d) in der Draufsicht zu einer gemeinsamen fiktiven oder konkret sichtbaren Fluchtlinie ausgerichtet sind, die sich aus der Fluchtlinie der laserinduzierten Markierung und aus der Fluchtlinie des Kennzeichnungselements abschnittsweise zusammensetzt.

11. Mehrschichtenkörper nach einem der vorangehenden Ansprüche,
**dadurch gekennzeichnet,**
**daß** die laserinduzierte Markierung (10, 10x, 10y) und/oder das Kennzeichnungselement (5b, 5c, 5d) als Guilloche ausgebildet ist bzw. sind.

12. Mehrschichtenkörper nach Anspruch 11,
**dadurch gekennzeichnet,**
**daß** die als Guilloche ausgebildete laserinduzierte Markierung (10, 10x, 10y) und das als Guilloche ausgebildete Kennzeichnungselement (5b, 5c, 5d) in der Draufsicht auf die Schichtenebene als eine passergenau zusammengesetzte gemeinsame Guilloche optisch erkennbar sind.

13. Mehrschichtenkörper nach einem der vorangehenden Ansprüche,
**dadurch gekennzeichnet,**
**daß** die laserinduzierte Markierung (10, 10x, 10y) und/oder das Kennzeichnungselement (5r, 5b) als Flächenelement, vorzugsweise als Reihe alternierender Flächenfelder ausgebildet ist bzw. sind.

14. Mehrschichtenkörper nach Anspruch 13,
**dadurch gekennzeichnet,**
**daß** die als vorzugsweise alternierende Flächenfelder ausgebildete laserinduzierte Markierung (10, 10x, 10y) und das als vorzugsweise alternierende Flächenfelder ausgebildete Kennzeichnungselement (5r, 5b) in der Draufsicht auf die Schichtenebene übereinander angeordnet sind, wobei die vorzugsweise alternierenden Flächenfelder der laserinduzierten Markierung (10, 10x, 10y) jeweils fluchtend oder konstant versetzt zu den vorzugsweise alternierenden Flächenfeldern (5r, 5b) des Kennzeichenelements angeordnet sind.

15. Mehrschichtenkörper nach Anspruch 13 oder 14
**dadurch gekennzeichnet,**
**daß** die als vorzugsweise alternierenden Flächenfelder ausgebildete laserinduzierte Markierung (10, 10x, 10y) und das als vorzugsweise alternierende Flächenfelder ausgebildete Kennzeichnungselement (5r, 5b) beim Betrachten zusammenwirken unter Ausbildung eines kombinatorischen Bildes, vorzugsweise bei unterschiedlichen Betrachtungswinkeln unter Ausbildung unterschiedlicher Bilder.

16. Mehrschichtenkörper nach einem der vorangehenden Ansprüche,
**dadurch gekennzeichnet,**
**daß** die laserinduzierte Markierung (10, 10x, 10y) als Farbmarkierung ausgebildet ist.

17. Mehrschichtenkörper nach einem der vorangehenden Ansprüche,
**dadurch gekennzeichnet,**
**daß** das lasersensitives Material der lasersensitiven Schicht (4, 40) als Gemisch von verschiedenen lasersensitiven Komponenten ausgebildet ist.

18. Mehrschichtenkörper nach Anspruch 17,
**dadurch gekennzeichnet,**
**daß** das Gemisch aus mindestens drei verschiedenen Farbmittelkomponenten, vorzugsweise Pigmentkomponenten zusammengesetzt ist, wobei jede dieser Komponenten, vorzugsweise jede Komponente des Gemischs, mittels Laser unter jeweils für die Komponente spezifischen Laserbedingungen bleichbar ist und/ oder daß das Gemisch aus mindestens drei verschiedenen farbbildenden Komponenten, vorzugsweise farbbildenden Farbmitteln zusammengesetzt ist, wobei jede dieser Komponenten, vorzugsweise jede Komponente des Gemischs, mittels Laser unter jeweils für die Komponente spezifischen Laserbedingungen farbveränderbar, vorzugsweise mit Farbumschlag farbveränderbar, ist.

19. Mehrschichtenkörper nach Anspruch 18,
**dadurch gekennzeichnet ,**
**daß** für jede der drei Komponenten gilt, daß unter den für eine Komponente spezifischen Laserbedingungen die übrigen Komponenten nicht oder im wesentlichen nicht bleichbar bzw. nicht farbveränderbar sind.

20. Mehrschichtenkörper nach Anspruch 18 oder 19,
**dadurch gekennzeichnet,**
**daß** das lasersensitive Material ein Cyan-Farbmittel, vorzugsweise Cyan-Pigment, und/oder ein Magenta-Farbmittel, vorzugsweise Magenta-Pigment, und/oder ein Gelbfarbmittel, vorzugsweise Gelb-Pigment, aufweist.

21. Mehrschichtenkörper nach Anspruch 20,
**dadurch gekennzeichnet,**
**daß** das Cyan-Farbmittel als ein mit rotem Laserlicht bleichbares Farbmittel ausgebildet ist und/oder daß das Magenta-Farbmittel als ein mit grünem Laserlicht bleichbares Farbmittel ausgebildet ist und/oder daß das Gelb-Farbmittel als ein mit blauem Laserlicht bleichbares Farbmittel ausgebildet ist.

22. Verfahren zur Erhöhung der Fälschungssicherheit eines Mehrschichtenkörpers, vorzugsweise Mehrschichtenfolie, der eine lasersensitive Schicht und ein Kennzeichnungselement aufweist, das in einer zweiten Schicht und/oder in einer lasersensitiven Schicht angeordnet ist,
**dadurch gekennzeichnet,**
**daß** der Mehrschichten-Körper mittels eines Lasers derart bestrahlt wird, daß in der lasersensitiven Schicht eine passergenau zur Position des Kennzeichenelements positionierte laserinduzierte Markierung erzeugt wird.

23. Verfahren nach Anspruch 22,
**dadurch gekennzeichnet,**
**daß** während der Laserbehandlung die Position des Laserstrahls relativ zur Folie abhängig von der Position des Kennzeichnungselements elektronisch gesteuert wird, vorzugsweise indem während oder vor der Laserbehandlung die ist-Position des Kennzeichnungselements elektronisch, z.B. über Bildverarbeitung erfaßt wird.

24. Verfahren nach Anspruch 23,
**dadurch gekennzeichnet,**
**daß** die Steuerung durch Bewegungsführung des Laserkopfs erfolgt.

25. Verfahren nach einem der Ansprüche 22 bis 24,
**dadurch gekennzeichnet,**
**daß** die Laserbestrahlung durch mindestens eine Schicht des Schichtenkörpers hindurch erfolgt, vorzugsweise durch eine über der lasersensitiven Schicht angeordnete Diffraktions- und/oder Hologrammstruktur und/oder vorzugsweise Reflexionsschicht hindurch.

26. Verfahren nach einem der Ansprüche 22 bis 25,
**dadurch gekennzeichnet,**
**daß** die laserinduzierte Markierung durch laserinduziertes Bleichen und/oder laserinduzierten Farbumschlag eines in der lasersensitiven Schicht angeordneten Farbmittels erfolgt.

27. Verfahren nach einem der Ansprüche 22 bis 26
**dadurch gekennzeichnet,**
**daß** die laserinduzierte Markierung durch vorzugsweise bereichsweises Abtragen der lasersensitiven Schicht erfolgt.

## Claims

1. Multilayer element, in particular a multilayer film, having a laser-sensitive layer (4, 40) and an identifying element, for example a diffraction and/or hologram structure (5b, 5c, 50b), reflective layer (5r, 50r), printed image (5d) or the like, which is formed in a second layer (5, 50) and/or in the laser-sensitive layer (4, 40), **characterized in that** the laser-sensitive layer (4, 40) has a marking (10, 10x, 10y) which is produced by laser action - called a laser-induced marking (10, 10x, 10y) below - which is positioned in accurate register relative to the identifying element (5r, 5b, 5c, 5d).

2. Multilayer element according to Claim 1, **characterized in that** the laser-induced marking (10, 10x, 10y) and the identifying element (5r, 5b, 5c, 5d), which can preferably be detected visually from outside, are formed and associated so as to complement one another in accurate register.

3. Multilayer element according to one of the preceding claims, **characterized in that** the laser-induced marking (10, 10x, 10y) and the identifying element (5r, 5b, 5c, 5d) are arranged on one another in accurate register on the layer plane, preferably immediately adjacent to one another in direct contact.

4. Multilayer element according to one of the preceding claims, **characterized in that** the laser-induced marking (10, 10x, 10y) and the identifying element (5r, 5b, 5c, 5d) are arranged to overlap each other in accurate register, completely or in sections.

5. Multilayer element according to one of the preceding claims, **characterized in that** the laser-induced marking (10, 10x, 10y) is arranged in a layer plane above or below the identifying element (5r, 5b, 5c, 5d) and/or in the same layer plane as the identifying element.

6. Multilayer element according to one of the preceding claims, **characterized in that** the identifying element is designed as a diffraction and/or hologram structure (5b, 5c) which is bounded characteristically in its external contour and/or as a reflective area (5r) which is bounded characteristically in its external contour and/or as a printed image (5d) bounded characteristically in its external contour.

7. Multilayer element according to one of the preceding claims, **characterized in that** the laser-induced marking (10, 10x, 10y) and/or the identifying element (5b, 5c, 5d) is or are formed. in the shape of a line.

8. Multilayer element according to Claim 7, **characterized in that** the line-shaped laser-induced marking (10, 10x, 10y) and the line-shaped identifying element (5b, 5c, 5d) can be detected visually in plan view of the layer plane as a line which is assembled in accurate register and preferably runs continuously.

9. Multilayer element according to one of. the preceding claims, **characterized in that** the laser-induced marking (10, 10x, 10y) and/or the identifying element is or are aligned relative to a line of alignment which is imaginary or actually visible, provision preferably being made for the laser-induced marking (10, 10x, 10y) and/or the identifying element (5d) to be a series of letters, a series of numbers or the like.

10. Multilayer element according to Claim 9, **characterized in that** the laser-induced marking (10, 10x, 10y) aligned with respect to a line of alignment and the identifying element (5b, 5c, 5d) aligned with respect to a line of alignment are aligned in plan view with a common line of alignment which is imaginary or actually visible, which is composed in sections of the line of alignment of the laser-induced marking and of the line of alignment of the identifying element.

11. Multilayer element according to one of the preceding claims, **characterized in that** the laser-induced marking (10, 10x, 10y) and/or the identifying element (5b, 5c, 5d) is or are formed as a guilloche.

12. Multilayer element according to Claim 11, **characterized in that** the laser-induced marking (10, 10x, 10y) formed as a guilloche and the identifying element (5b, 5c, 5d) formed as a guilloche can be detected optically in the plan view of the layer plane as a common guilloche assembled in accurate register.

13. Multilayer element according to one of the preceding claims, **characterized in that** the laser-induced marking (10, 10x, 10y) and/or the identifying element (5r, 5b) is or are formed as a two-dimensional element, preferably as a row of alternating two-dimensional fields.

14. Multilayer element according to Claim 13, **characterized in that** the laser-induced marking (10, 10x, 10y) formed as preferably alternating two-dimensional fields and the identifying element (5r, 5b) formed as preferably alternating two-dimensional fields are arranged one above the other in the plan view of the layer plane, the preferably alternating two-dimensional fields of the laser-induced marking (10, 10x, 10y) in each case being arranged in alignment with or constantly offset with respect to the preferably alternating two-dimensional fields (5r, 5b) of the identifying element.

15. Multilayer element according to Claim 13 or 14, **characterized in that** the laser-induced marking (10, 10x, 10y) formed as preferably alternating two-dimensional fields and the identifying element (5r, 5b) formed as preferably alternating two-dimensional fields interact when viewed, forming a combinatorial image, preferably forming different images at different viewing angles.

16. Multilayer element according to one of the preceding claims, **characterized in that** the laser-induced marking (10, 10x, 10y) is formed as a coloured marking.

17. Multilayer element according to one of the preceding claims, **characterized in that** the laser-sensitive material of the laser-sensitive layer (4, 40) is formed as a mixture of different laser-sensitive components.

18. Multilayer element according to Claim 17, **characterized in that** the mixture is composed of at least three different colorant components, preferably pigment components, it being possible for each of these components, preferably each component of the mixture, to be bleached by means of a laser under laser conditions respectively specific to the component and/or **in that** the mixture is composed of at least three different chromophoric components, preferably chromophoric colorants, it being possible for each of these components, preferably each component of the mixture, to have its colour changed by means of a laser under laser conditions respectively specific to the component, preferably to have its colour changed with a discoloration.

19. Multilayer element according to Claim 18, **characterized in that** it is true of each of the three components that, under the specific laser conditions for a component, the remaining components cannot be bleached or substantially cannot be bleached or cannot have their colour changed.

20. Multilayer element according to Claim 18 or 19, **characterized in that** the laser-sensitive material has a cyan colorant, preferably a cyan pigment, and/or a magenta colorant, preferably a magenta pigment, and/or a yellow colorant, preferably a yellow pigment.

21. Multilayer element according to Claim 20, **characterized in that** the cyan colorant is formed as a colorant that can be bleached with red laser light and/or **in that** the magenta colorant is formed as a colorant that can be bleached with green laser light and/or **in that** the yellow colorant is formed as a colorant that can be bleached with blue laser light.

22. Method of increasing the security against forgery of a multilayer element, preferably a multilayer film, which has a laser-sensitive layer and an identifying element, which is arranged in a second layer and/or in a laser-sensitive layer, **characterized in that** the multilayer element is irradiated by means of a laser in such a way that a laser-induced marking positioned in accurate register with the position of the identifying element is produced in the laser-sensitive layer.

23. Method according to Claim 22, **characterized in that**, during the laser treatment, the position of the laser beam relative to the film is controlled electronically as a function of the position of the identifying element, preferably by the actual position of the identifying element being registered electronically, for example via image processing, during or before the laser treatment.

24. Method according to Claim 23, **characterized in that** the control is carried out by guiding the movement of the laser head.

25. Method according to one of Claims 22 to 24, **characterized in that** the laser irradiation is carried out through at least one layer of the layered element, preferably through a diffraction and/or hologram structure arranged above the laser-sensitive layer and/or preferably a reflective layer.

26. Method according to one of Claims 22 to 25, **characterized in that** the laser-induced marking is carried out by means of laser-induced bleaching and/or laser-induced discoloration of a colorant arranged in the laser-sensitive layer.

27. Method according to one of Claims 22 to 26, **characterized in that** the laser-induced marking is carried out by means of preferably regional removal of the laser-sensitive layer.

## Revendications

1. Corps multicouche, en particulier film multi,couche,
avec une couche sensible au laser (4, 40) et un
élément d'identification, par exemple une structure de diffraction et / ou d'hologramme (5b, 5c, 50b), une couche de réflexion (5r, 50r), une image imprimée (5d) ou similaires, qui est configuré dans une deuxième couche (5, 50) et / ou dans la couche sensible au laser (4, 40),
**caractérisé en ce que**
la couche sensible au laser (4, 40) comporte une marque (10, 10x, 10y) produite par effet de laser, appelée ci-après marque induite par laser (10, 10x, 10y), qui est positionnée en coïncidence par rapport à l'élément d'identification (5r, 5b, 5c, 5d).

2. Corps multicouche selon la revendication 1,
**caractérisé en ce que**
la marque induite par laser (10, 10x, 10y) et l'élément d'identification (5r, 5b, 5c, 5d) sont reconnaissables de préférence optiquement de l'extérieur, sont configurés en coïncidence de façon à se compléter et sont affectés l'un à l'autre.

3. Corps multicouche selon l'une quelconque des revendications précédentes,
**caractérisé en ce que**
en vue de dessus sur le plan des couches, la marque induite par laser (10, 10x, 10y) et l'élément d'identification (5r, 5b, 5c, 5d) sont disposés en coïncidence l'un par rapport à l'autre, de préférence immédiatement contigus en contact direct.

4. Corps multicouche selon l'une quelconque des revendications précédentes,
**caractérisé en ce que**
la marque induite par laser (10, 10x, 10y) et l'élément d'identification (5r, 5b, 5c, 5d) sont configurés en coïncidence de façon à se chevaucher complètement ou par sections.

5. Corps multicouche selon l'une quelconque des revendications précédentes,
**caractérisé en ce que**
la marque induite par laser (10, 10x, 10y) est disposée dans-un plan de couche au-dessus ou en dessous de l'élément d'identification (5r, 5b, 5c, 5d) et / ou dans le même plan de couche que l'élément d'identification.

6. Corps multicouche selon l'une quelconque des revendications précédentes,
**caractérisé en ce que**
l'élément d'identification est configuré comme une structure de diffraction et / ou d'hologramme (5b, 5c) limitée de façon caractéristique dans son contour externe, et / ou comme un champ de réflexion (5r) limité de façon caractéristique dans son contour externe, et / ou comme une image imprimée (5d) limitée de façon caractéristique dans son contour externe.

7. Corps multicouche selon l'une quelconque des revendications précédentes,
**caractérisé en ce que**
la marque induite par laser (10, 10x, 10y) et / ou l'élément d'identification (5b, 5c, 5d) est, respectivement sont configuré(e)(s) en forme de ligne.

8. Corps multicouche selon la revendication 7,
**caractérisé en ce que**
la marque linéaire induite par laser (10, 10x, 10y) et l'élément d'identification linéaire (5b, 5c, 5d) sont reconnaissables en vue de dessus sur le plan des couches comme une ligne composée en coïncidence, dont le tracé est de préférence continu.

9. Corps multicouche selon l'une quelconque des revendications précédentes,
**caractérisé en ce que**
la marque induite par laser (10, 10x, 10y) et / ou l'élément d'identification est, respectivement sont orienté(e)(s) par rapport à une ligne de fuite fictive ou présente de façon concrètement visible, sachant qu'il est prévu que la marque induite par laser (10, 10x, 10y) et / ou l'élément d'identification (5d) soi(en)t une suite de lettres, une suite de chiffres ou similaires.

10. Corps multicouche selon la revendication 9,
**caractérisé en ce que**
la marque induite par laser (10, 10x, 10y) orientée en fonction d'une ligne de fuite et l'élément d'identification (5b, 5c, 5d) orienté en fonction d'une ligne de fuite sont orientés en vue de dessus en une ligne de fuite commune fictive ou visible de façon concrète, qui se compose par sections de la ligne de fuite de la marque induite par laser et de la ligne de fuite de l'élément d'identification.

11. Corps multicouche selon l'une quelconque des revendications précédentes,
**caractérisé en ce que**
la marque induite par laser (10, 10x, 10y) et / ou l'élément d'identification (5b, 5c, 5d) est, respectivement sont configuré(e)(s) comme guillochis.

12. Corps multicouche selon la revendication 11,
**caractérisé en ce que**
la marque induite par laser (10, 10x, 10y) configurée comme guillochis et l'élément d'identification (5b, 5c, 5d) configuré comme guillochis sont reconnaissables optiquement en vue de dessus sur le plan des couches comme un guillochis commun assemblé en coïncidence.

13. Corps multicouche selon l'une quelconque des revendications précédentes,
**caractérisé en ce que**
la marque induite par laser (10, 10x, 10y) et / ou l'élément d'identification (5r, 5b) est, respectivement sont configuré(e)(s) comme élément(s) surfacique(s), de préférence comme rangée de champs de surface en alternance.

14. Corps multicouche selon la revendication 13,
**caractérisé en ce que**
la marque induite par laser (10, 10x, 10y) configurée comme des champs de surface de préférence en alternance et l'élément d'identification (5r, 5b) configuré comme des champs de surface de préférence en alternance sont disposés, en vue de dessus sur le plan des couches, l'un au-dessus de l'autre, sachant que les champs de surface de préférence en alternance de la marque induite par laser (10, 10x, 10y) sont disposés respectivement en coïncidence ou décalés de façon constante par rapport aux champs de surface de préférence en alternance (5r, 5b) de l'élément d'identification.

15. Corps multicouche selon la revendication 13 ou 14,
**caractérisé en ce que**
la marque induite par laser (10, 10x, 10y) configurée comme des champs de surface de préférence en alternance, et l'élément d'identification (5r, 5b) configuré comme des champs de surface de préférence en alternance, agissent concurremment lors de l'observation en formant une image combinée, de préférence en formant plusieurs images combinées sous différents angles d'observation.

16. Corps multicouche selon l'une quelconque des revendications précédentes,
**caractérisé en ce que**
la marque induite par laser (10, 10x, 10y) est configurée comme marque de couleur.

17. Corps multicouche selon l'une quelconque des revendications précédentes,
**caractérisé en ce que**
le matériau sensible au laser de la couche sensible au laser (4, 40) est configuré comme mélange de différents composants sensibles au laser.

18. Corps multicouche selon la revendication 17,
**caractérisé en ce que**
le mélange est constitué d'au moins trois composants de colorants différents, de préférence des composants de pigments, sachant que chacun de ces composants, de préférence chaque composant du mélange, peut être décoloré au moyen du laser sous les conditions de laser respectivement spécifiques au composant, et / ou que le mélange est constitué d'au moins trois composants chromogènes différents, de préférence des colorants chromogènes, sachant que chacun de ces composants, de préférence chaque composant du mélange, est capable d'un changement de couleur, de préférence capable d'un changement de couleur avec virage, au moyen du laser sous les conditions de laser respectivement spécifiques au composant.

19. Corps multicouche selon la revendication 18,
**caractérisé en ce que**
pour chacun des trois composants s'applique que sous les conditions de laser spécifiques pour un composant, les autres composants ne peuvent pas du tout ou ne peuvent guère être décolorés, respectivement changer de couleur.

20. Corps multicouche selon la revendication 18 ou 19,
**caractérisé en ce que**
le matériau sensible au laser comporte un colorant cyan, de préférence un pigment cyan et / ou un colorant magenta, de préférence un pigment magenta et / ou un colorant jaune, de préférence un pigment jaune.

21. Corps multicouche selon la revendication 20,
**caractérisé en ce que**
le colorant cyan est configuré comme un colorant pouvant être décoloré avec de la lumière laser rouge et / ou **en ce que** le colorant magenta est configuré comme un colorant pouvant être décoloré avec de la lumière laser verte et / ou **en ce que** le colorant jaune est configuré comme un colorant pouvant être décoloré avec de la lumière laser bleue.

22. Procédé pour l'accroissement de la sûreté vis-à-vis des contrefaçons d'un corps multicouche, de préférence d'un film multicouche,
qui comporte une couche sensible au laser et un élément d'identification qui est disposé dans une deuxième couche et / ou dans la couche sensible au laser,
**caractérisé en ce que**
le corps multicouche est irradié au moyen d'un laser de telle sorte que, dans la couche sensible au laser, une marque induite par le laser, positionnée en coïncidence avec la position de l'élément d'identification, est engendrée.

23. Procédé selon la revendication 22,
**caractérisé en ce que**
pendant le traitement par le laser, la position du faisceau laser par rapport au film est commandée électroniquement en fonction de la position de l'élément d'identification, de préférence **en ce que** la position réelle de l'élément d'identification est saisie électroniquement pendant ou avant le traitement par laser, par exemple par traitement d'image.

24. Procédé selon la revendication 23,
**caractérisé en ce que**
la commande s'effectue par guidage du mouvement de la tête du laser.

25. Procédé selon l'une quelconque des revendications 22 à 24,
**caractérisé en ce que**
l'irradiation par le laser s'effectue à travers au moins une couche du corps stratifié, de préférence à travers une structure de diffraction et / ou d'hologramme et / ou de préférence une couche de réflexion disposée(s) au-dessus de la couche sensible au laser.

26. Procédé selon l'une quelconque des revendications 22 à 25,
**caractérisé en ce que**
le marquage induit par laser s'effectue par décoloration induite par laser et / ou par virage de couleur induit par laser d'un des colorants disposés dans la couche sensible au laser.

27. Procédé selon l'une quelconque des revendications 22 à 26,
**caractérisé en ce que**
le marquage induit par laser s'effectue par enlèvement, de préférence par zones, de la couche sensible au laser.
